# EUROPÄISCHE PATENTSCHRIFT

(11) **EP 4 488 615 B1**
(45) Veröffentlichungstag und Bekanntmachung des Hinweises auf die Patenterteilung: **13.05.2026**
(21) Anmeldenummer: 24182985.2
(22) Anmeldetag: 19.06.2024
(51) Int. Cl.: G01B 9/02015, G01B 9/02055, G01B 9/02091, B23K 26/03

(54) **OPTISCHE KOHÄRENZTOMOGRAFIE-VORRICHTUNG FÜR EIN LASERBEARBEITUNGSSYSTEM SOWIE LASERBEARBEITUNGSSYSTEM MIT DERSELBEN**
OPTICAL COHERENCE TOMOGRAPHY DEVICE FOR A LASER MACHINING SYSTEM AND LASER MACHINING SYSTEM HAVING SAME
DISPOSITIF DE TOMOGRAPHIE PAR COHÉRENCE OPTIQUE POUR SYSTÈME D'USINAGE AU LASER ET SYSTÈME D'USINAGE AU LASER L'UTILISANT

(30) Priorität: 22.06.2023 DE 102023116430
(43) Veröffentlichungstag der Anmeldung: 08.01.2025
(73) Patentinhaber: Precitec GmbH & Co. KG, 76571 Gaggenau-Bad Rotenfels (DE)
(72) Erfinder: Shkarban, Igor, 76287 Rheinstetten (DE); Moser, Rüdiger, 76316 Malsch (DE); Chang, Li Wen, 76437 Rastatt (DE)
(74) Vertreter: Ter Meer Steinmeister & Partner

(56) Entgegenhaltungen:
- US-A1- 2020 001 395
- HUI WANG ET AL: "Extending the effective imaging range of Fourier-domain optical coherence tomography using a fiber optic switch", OPTICS LETTERS, OPTICAL SOCIETY OF AMERICA, US, vol. 33, no. 22, 15 November 2008 (2008-11-15), pages 2632 - 2634, XP001520926, ISSN: 0146-9592, DOI: 10.1364/OL.33.002632

## Beschreibung

### Technisches Gebiet

Die vorliegende Offenbarung betrifft eine optische Kohärenztomografie-Vorrichtung für ein Laserbearbeitungssystem zur Abstandsmessung zu einem Objekt bzw. zu einem Werkstück sowie einen Laserbearbeitungssystem mit derselben.

### Technischer Hintergrund

In einem System zur Materialbearbeitung mittels Laser, d.h. in einem Laserbearbeitungssystem, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimatoroptik und einer Fokussierungsoptik verwendet, wobei das Laserlicht über eine Lichtleitfaser zugeführt wird. In der Lasermaterialbearbeitung kann eine optische Kohärenztomografie (OCT) -Vorrichtung verwendet werden, um verschiedene Prozessparameter zu messen, wie beispielsweise den Abstand zum Werkstück, eine Kantenposition im Vorlauf sowie eine Einschweißtiefe während eines Schweißprozesses oder eine Oberflächentopografie im Nachlauf. Hierbei wird ein Messlichtstrahl durch eine Scannervorrichtung auf eine gewünschte Position auf dem Werkstück gerichtet.

Optische Kohärenztomografie (OCT) nutzt Interferenzeffekte, um Abstandsunterschiede in Relation zu einer Referenzstrecke festzustellen. Die vordefinierte Referenzstrecke einer OCT-Vorrichtung legt den absoluten Abstand zum zu vermessenden Objekt fest. In dieser Distanz ist eine Messung innerhalb eines Messbereiches möglich. Der Messbereich der OCT-Vorrichtung ist durch die Eigenschaften der verwendeten Messlichtquelle (z.B. eine Super-Lumineszenz Diode) und des Detektors festgelegt. Typischerweise liegt eine Größe des Messbereichs im Bereich von wenigen Millimetern <20mm. Mit anderen Worten misst eine OCT-Vorrichtung den Unterschied zwischen der optischen Weglänge eines Messarms und der eines Referenzarms, um einen Abstand zu bestimmen.

Bei einem sogenannten Scanner-Laserbearbeitungssystem kann der Laserstrahl (d.h. der Bearbeitungslaserstrahl) mittels einer Scannervorrichtung auf verschiedene Positionen auf dem Werkstück gerichtet werden. Die Scannervorrichtung umfasst üblicherweise zumindest ein Scanelement, z.B. zumindest einen Scanspiegel, der um eine oder zwei Achsen schwenkbar ist, um den Laserstrahl auszulenken. Bei einem Scanner-Laserbearbeitungssystem verändert sich daher die optische Weglänge (OWL) mit der Auslenkung des Spiegels. Um im gesamten Arbeits- bzw. Scanbereich gleichermaßen messen zu können, muss diese OWL-Änderung bei der Messung berücksichtigt werden und reduziert dadurch den effektiv nutzbaren OCT-Messbereich. In vielen Fällen ist die Zunahme der optischen Weglänge größer als der Messbereich des OCT. Dann sind Abstandsmessungen insbesondere am Rand des Scanfeldes nicht mehr möglich. Aus diesem Grund ist der Einsatz von mehreren Referenzstrecken mit unterschiedlichen Längen bzw. unterschiedlichen Messbereichen oder der Einsatz einer in der Länge veränderbaren Referenzstrecke nötig, um im gesamten Scanbereich messen zu können.

Bekannte Verfahren zur Vergrößerung des Messbereichs eines OCT-Messsystems, beispielsweise wie in der DE 10 2013 008 269 A1 beschrieben, basieren auf der synchronen Anpassung der optischen Weglänge im Referenzarm. Die Anpassung erfolgt durch eine mechanische Änderung der optischen Weglänge des Referenzarms, z.B. indem die Position eines Endspiegels oder Prismas auf einer Linearachse verändert wird. Nachteile dieser Verfahren liegen in der sehr aufwendigen Ansteuerung der beschriebenen Mechanik. In der EP 3 830 515 B1 wird ein OCT-Messsystem beschrieben, bei dem das reflektierte Messlicht gleichzeitig in eine Vielzahl von Referenzstrecken des Referenzarms geführt wird. Ein weiteres OCT Messsystem mit einer Vielzahl von Referenzstrecken ist aus US2020/001395 A1 bekannt.

Diese bekannten Verfahren nutzen den einseitigen Messbereich des OCT-Messsystems, d.h. einen positiven Messbereich oder einen negativen Messbereich (also entweder die positive oder die negative Lösung der Fouriertransformation, die das Abstandssignal ausgibt). Hier wird beispielsweise durch eine Vorjustage festgelegt, welcher Teil des Messbereichs genutzt wird, um die Eindeutigkeit der Messung möglich zu machen und die Singularität bei 0 Punkt zu umgehen. Damit ergibt sich die Zahl der Referenzstrecken, die den Abstandsbereich ΔM abdecken sollen: N= ΔM/Δm, wobei Δm der maximal mögliche Messbereich bei einer Referenzarm-Einstellung, d.h. von einer Referenzstrecke, ist. Der maximal mögliche Messbereich bezeichnet hier den einseitigen Messbereich, in dem ein erkennbares Messignal detektierbar ist. Eine Vorgabe von einem großen ΔM, z.B. bei einem Scanner-Laserbearbeitungssystem, hat zur Folge, dass viele Referenzstrecken aufgebaut werden müssen. Für die Anwendung in einem Scanner-Laserbearbeitungssystem ist demnach eine sehr hohe Zahl von Referenzstrecken notwendig oder andere kostspielige Bauteile müssen eingesetzt werden, was zu hohen Herstellungskosten, einem großen Platzbedarf und hohen Justage-Aufwand führt.

### Zusammenfassung der Erfindung

Es ist eine Aufgabe der vorliegenden Erfindung, eine optische Kohärenztomografie-Vorrichtung für ein Laserbearbeitungssystem zur Abstandsmessung zu einem Objekt bzw. zu einem Werkstück anzugeben, die einen erweiterten Messbereich aufweist bzw. eine bessere Nutzung eines Messbereichs ermöglicht, sowie ein Laserbearbeitungssystem mit derselben.

Es ist eine Aufgabe der vorliegenden Erfindung, eine kostengünstige und kompakte optische Kohärenztomografie-Vorrichtung für ein Laserbearbeitungssystem zur Abstandsmessung zu einem Objekt bzw. zu einem Werkstück anzugeben, insbesondere mit einem möglichst großen Messbereich und einer möglichst geringen Anzahl an Referenzstrecken in einem Referenzarm-Aufbau, sowie ein Laserbearbeitungssystem mit derselben.

Es ist eine Aufgabe der vorliegenden Erfindung, eine kostengünstige und kompakte optische Kohärenztomografie-Vorrichtung für ein Laserbearbeitungssystem zur Abstandsmessung zu einem Objekt bzw. zu einem Werkstück anzugeben, insbesondere mit einem großen Messbereich und einem kompakten Referenzarm-Aufbau, sowie ein Laserbearbeitungssystem mit derselben.

Es ist eine Aufgabe der vorliegenden Erfindung, eine optische Kohärenztomografie-Vorrichtung für ein Scanner-Laserbearbeitungssystem zur Abstandsmessung zu einem Objekt bzw. zu einem Werkstück anzugeben, die für die Vermessung von großen Flächen geeignet ist, auf welchen Bauteile bzw. Werkstücke mit unterschiedlichen Höhen (aufgrund von Montage und Fertigungstoleranzen) platziert sind, sowie ein Laserbearbeitungssystem mit derselben.

Es ist eine Aufgabe der vorliegenden Erfindung, eine optische Kohärenztomografie-Vorrichtung für ein Laserbearbeitungssystem zur Abstandsmessung zu einem Objekt bzw. zu einem Werkstück anzugeben, mit einem kompakten und passiven Referenzarm-Aufbau, um an verschiedensten Positionen Bauteile vermessen zu können, ungeachtet von vergleichsweise großen Höhenschwankungen durch mechanische Toleranzen, sowie ein Laserbearbeitungssystem mit derselben.

Zumindest eine dieser Aufgaben wird durch den Gegenstand des unabhängigen Anspruchs gelöst.

Der vorliegenden Erfindung liegt die Idee zugrunde, in einer optischen Kohärenztomografie-Vorrichtung zur Abstandsmessung bei der Laserbearbeitung einen Referenzarm mit mehreren Referenzstrecken zu verwenden, wobei eine Anzahl der notwendigen Referenzstrecken dadurch reduziert wird, dass ein Schaltelement bzw. ein steuerbares Element (z.B. ein Motor oder insbesondere ein Faserschalter auf MEMS-Basis) den Wechsel zwischen den einzelnen Referenzstrecken gewährleistet, und dadurch, dass sowohl positive als auch negative Messbereiche der Referenzstrecken genutzt werden. Das hier zum Einsatz gebrachte Sensorprinzip ist die optische Kurzkohärenz Interferometrie zur Abstandsmessung. In dieser Offenbarung kann "Abstand" auch als "relativer Abstand" bezeichnet werden.

Wie eingangs dargestellt, wird herkömmlicherweise bei der Abstandsmessung nicht unterschieden, welcher der beiden Arme die längere optische Weglänge aufweist, da lediglich der Längenunterschied bzw. der Betrag des Längenunterschieds gemessen wird. Da der positive und der negative Messbereich, in denen die optische Weglänge des Messarms bzw. die optische Weglänge des Referenzarms länger ist, nicht unterscheidbar sind, wird also in der Regel lediglich einer der beiden Bereiche verwendet (z.B. bei dem die optische Weglänge des Referenzarm kürzer ist als die des Messarms). Somit wird die Hälfte des theoretisch verfügbaren Messbereichs, d.h. in dem eine Abstandsmessung physikalisch möglich ist, nicht genutzt. Erfindungsgemäß wird hingegen sowohl der positive als auch der negative Messbereich einer Referenzstrecke zur Abstandsmessung verwendet, indem gezielt mittels eines Schaltelements von einem positiven bzw. negativen Messbereich einer Referenzstrecke zu einem positiven bzw. negativen Messbereich einer anderen Referenzstrecke des Referenzarms geschaltet bzw. gewechselt wird. Bei dem herkömmlichen Referenzarm-Aufbau unter Nutzung des einseitigen Messbereichs ist es so, dass bei größer werdendem Abstand (d.h. Messabstand bzw. zu messender Abstand) immer zu einer längeren Referenzstrecke umgeschaltet werden muss, um diese Abstandsänderung auszugleichen. Gemäß der vorliegenden Erfindung sind bei länger werdendem Messabstand explizit Wechsel zu einer kürzeren Referenzstrecke möglich und vorteilhaft, d.h. es wird aus dem negativen aktiven Messbereich einer längeren Referenzstrecke zum positiven aktiven Messbereich einer kürzeren Referenzstrecke gewechselt. Dadurch lässt sich die Zahl der nötigen Referenzstrecken deutlich reduzieren.

Gemäß einem Aspekt der vorliegenden Erfindung umfasst eine optische Kohärenztomografie-Vorrichtung für ein Laserbearbeitungssystem zur Abstandsmessung zu einem Objekt bzw. zu einem Werkstück: einen Messarm zum Richten eines Messlichtstrahls auf das Objekt; einen Referenzarm zum Führen eines Referenzstrahls mit einer Vielzahl von Referenzstrecken, die verschiedene Messbereiche bzw. optische Weglängen aufweisen; und ein steuerbares Schaltelement zum Schalten zwischen den Referenzstrecken des Referenzarms. Der Messbereich von jeder Referenzstrecke umfasst einen negativen aktiven Messbereich und einen positiven aktiven Messbereich, zwischen denen ein Totbereich liegt. Der Totbereich von zumindest einer der Referenzstrecken ist von einem positiven oder negativen aktiven Messbereich von zumindest einer anderen Referenzstrecke überlappt. Die positiven und negativen aktiven Messbereiche der Referenzstrecken decken zusammen einen vorgegebenen Abstandsbereich ab. Somit sind zur Abstandsmessung in dem vorgegebenen Abstandsbereich sowohl die positiven als auch die negativen aktiven Messbereiche der Referenzstrecken vorgesehen.

Das steuerbare Schaltelement ist eingerichtet und/oder so mit den Referenzstrecken verbunden, um zwischen dem positiven aktiven Messbereich einer der Referenzstrecken und dem negativen aktiven Messbereich einer anderen der Referenzstrecken hin und her zu schalten bzw. umzuschalten. Mit anderen Worten kann das Schaltelement entsprechend mit den Referenzstrecken verbunden sein, um auf jeden der positiven und negativen aktiven Messbereiche der Referenzstrecken schalten zu können.

Das Schaltelement ist ein steuerbares Schaltelement, z.B. ein Motor-basiertes Schaltelement, ein optischer Switch, ein Faserschalter, insbesondere ein Faser-Umschalter auf MEMS Basis, etc.. Jeder Referenzstrecke kann eine Position des Schaltelements zugeordnet sein. Die Referenzstrecken können fasergebundene Referenzstrecken und/oder Freistrahl-Referenzstrecken umfassen oder sein. Die optische Kohärenztomografie-Vorrichtung kann eine Steuerung zum Steuern des Schaltelements umfassen. Die Steuerung kann eingerichtet sein, mittels des Schaltelements zwischen dem positiven aktiven Messbereich einer der Referenzstrecken und dem negativen aktiven Messbereich einer anderen der Referenzstrecken hin und her zu schalten. Insbesondere kann die Steuerung eingerichtet sein, eine Referenzstrecke mit einem positiven aktiven oder negativen aktiven Messbereich entsprechend einem vorgegebenen bzw. gewünschten Teilbereich des Abstandsbereichs auszuwählen und mittels des Schaltelements in die ausgewählte Referenzstrecke zu schalten. Die Steuerung kann hierfür eingerichtet sein, ein Signal mit Information über den vorgegebenen bzw. gewünschten Teilbereich des Abstandsbereichs zu empfangen, z.B. von einer Steuervorrichtung eines Laserbearbeitungssystems.

Die optische Kohärenztomografie-Vorrichtung kann eine Vorrichtung für optische Abstandsmessung bei der Lasermaterialbearbeitung sein, d.h. beim Schneiden, Schweißen, Abtragen sowie additiver LPBF (Laser Powder Bed Fusion) und LMD (Laser Material Deposition) Prozesse mittels Laserstrahlen.

Die optische Kohärenztomografie-Vorrichtung umfasst ferner eine Messlichtquelle zum Erzeugen von Messlicht, z.B. eine Superlumineszenzdiode oder eine Laserdiode. Die optische Kohärenztomografie-Vorrichtung umfasst ein optisches Element zum Aufteilen des Messlichts in den Messlichtstrahl und den Referenzstrahl. Die optische Kohärenztomografie-Vorrichtung umfasst ferner einen Detektor zum Erfassen eines Interferenzsignals, d.h. zum Erfassen von Interferenzeffekten zwischen dem Messarm und dem Referenzarm. Das Interferenzsignal kann auf einer Interferenz zwischen einem vom Objekt reflektierten Anteil des Messlichtstrahls und dem Referenzstrahl basieren bzw. einer optischen Weglängendifferenz zwischen dem Messarm und dem Referenzarm entsprechen.

Jede Referenzstrecke des Referenzarms kann einen anderen Messbereich bzw. eine andere optische Weglänge aufweisen als die anderen Referenzstrecken. Mit anderen Worten kann der Messbereich einer jeden Referenzstrecke einem anderen Abstandswertebereich entsprechen. Die Messbereiche der Referenzstrecken können jeweils um einen vorgegebenen Betrag gegeneinander verschoben sein und/oder sich überlappen. Die Messbereiche der Referenzstrecken können gleich groß sein (aber verschiedenen Abstandswertebereichen entsprechen). Wenn der Referenzarm N Referenzstrecken aufweist, kann eine n-te Referenzstrecke kürzer sein (d.h. eine kürzere optische Weglänge aufweisen bzw. einen Messbereich aufweisen, der kleinere Abstandswerte umfasst) als eine (n+1)-te Referenzstrecke, wobei n, N natürliche Zahlen sind mit 1 < N und 1 ≤ n ≤ N. Die erste Referenzstrecke kann also auch als kürzeste Referenzstrecke und/oder die N-te Referenzstrecke als längste Referenzstrecke bezeichnet werden.

Der Messbereich jeder Referenzstrecke, d.h. der theoretisch zu Verfügung stehende Messbereich, weist einen negativen aktiven Messbereich und einen positiven aktiven Messbereich auf, d.h. einen negativen Bereich und einen positiven Bereich, die zur Abstandsmessung verwendet werden können. Der Messbereich jeder Referenzstrecke wird von dem Totbereich geteilt, der die Singularität um Null enthält und in dem kein Messergebnis erhalten werden kann. Der Totbereich liegt zwischen dem negativen aktiven Messbereich und dem positiven aktiven Messbereich und kann unmittelbar an diese angrenzen (d.h. in diesem Fall liegt kein Toleranzbereich dazwischen). Ein negativer aktiver Messbereich einer Referenzstrecke kann kleineren Abstandswerten entsprechen als ein positiver aktiver Messbereich derselben Referenzstrecke.

Die positiven und negativen aktiven Messbereiche der Referenzstrecken decken zusammen den vorgegebenen Abstandsbereich (insbesondere vollständig bzw. lückenlos) ab. Die Vorrichtung ist also eingerichtet, in dem gesamten vorgegebenen Abstandsbereich zu messen. Mit anderen Worten bezeichnet der vorgegebene Abstandsbereich den Bereich, in dem die Vorrichtung eingerichtet sein soll, Abstandsmessungen vorzunehmen. Hierfür ist der Totbereich von zumindest einer der Referenzstrecken von einem positiven oder negativen aktiven Messbereich von zumindest einer anderen Referenzstrecke überlappt.

Die Referenzstrecken können zumindest eine Referenzstrecke enthalten, deren negativer aktiver Messbereich größeren Abstandswerten entspricht als ein negativer aktiver Messbereich zumindest einer anderen Referenzstrecke und deren negativer aktiver Messbereich kleineren Abstandswerten entspricht als ein positiver aktiver Messbereich dieser zumindest einen anderen Referenzstrecke. Die positiven und negativen aktiven Messbereiche der Referenzstrecken können also ineinander verschachtelt sein. Das heißt, zwischen dem positiven und negativen aktiven Messbereich einer Referenzstrecke kann ein positiver oder negativer aktiver Messbereich einer anderen Referenzstrecke angeordnet sein. Ein Teilbereich des vorgegebenen Abstandsbereichs, der zwischen dem positiven und negativen aktiven Messbereich einer Referenzstrecke liegt, kann also durch einen positiven oder negativen aktiven Messbereich einer anderen Referenzstrecke abgedeckt sein.

Die positiven und negativen aktiven Messbereiche der Referenzstrecken können unmittelbar aneinander angrenzen, d.h. vorzugsweise überlappt keiner der positiven und negativen aktiven Messbereiche einen anderen der positiven und negativen aktiven Messbereiche. Jeder der positiven und negativen aktiven Messbereiche kann einem anderen Teilbereich des vorgegebenen Abstandsbereichs zugeordnet sein. Insbesondere kann jeder negative aktive Messbereich und jeder positive aktive Messbereich eindeutig einem Teilbereich des vorgegebenen Abstandsbereichs zugeordnet sein, und/oder jeder Teilbereich des vorgegebenen Abstandsbereichs kann eindeutig einem von den negativen und positiven aktiven Messbereichen zugeordnet sein. Hierbei können die Teilbereiche des vorgegebenen Abstandsbereichs unmittelbar aneinander angrenzen, d.h. sie überlappen sich nicht. Die eindeutige Zuordnung der aktiven Messbereiche zu Teilbereichen des vorgegebenen Abstandsbereichs ermöglichen eine einfache Ansteuerung der optischen Kohärenztomografie-Vorrichtung.

Zumindest ein Teilbereich des vorgegebenen Abstandsbereichs kann einem negativen aktiven Messbereich eines der Referenzarme zugeordnet sein und ein weiterer bzw. anderer Teilbereich des vorgegebenen Abstandsbereichs kann einem positiven aktiven Messbereich desselben Referenzarms zugeordnet sein. Mit anderen Worten werden beide aktive Messbereiche dieses Referenzarms zur Abstandsmessung in dem vorgegebenen Abstandsbereich eingesetzt.

Die Anordnung der aktiven Messbereiche (insbesondere eine Verschaltung der aktiven Messbereiche) und/oder die Zuordnung der aktiven Messbereiche zu Teilbereichen des vorgegebenen Abstandsbereichs kann vorgegeben bzw. voreingestellt sein. Die Zuordnung kann (beispielsweise in der Steuerung der optischen Kohärenztomografie-Vorrichtung oder in einer Steuervorrichtung eines Laserbearbeitungssystems) gespeichert bzw. hinterlegt sein. Die Anordnung der aktiven Messbereiche (insbesondere eine Verschaltung der aktiven Messbereiche) und/oder die Zuordnung der aktiven Messbereiche zu Teilbereichen des vorgegebenen Abstandsbereichs kann als Justage bezeichnet werden.

Der Referenzarm kann N Referenzstrecken umfassen, wobei N eine natürliche Zahl größer 1 ist. Ein negativer aktiver Messbereich einer n-ten Referenzstrecke kann kleineren Abstandswerten entsprechen bzw. kleinere Abstandswerte umfassen als ein negativer aktiver Messbereich einer (n+1)-ten Referenzstrecke, wobei N eine natürliche Zahl größer 1 ist und n eine natürliche Zahl mit 1 ≤ n ≤ N ist. Ein positiver aktiver Messbereich einer n-ten Referenzstrecke kann kleineren Abstandswerten entsprechen bzw. kleinere Abstandswerte umfassen als ein positiver aktiver Messbereich einer (n+1)-ten Referenzstrecke, wobei N eine natürliche Zahl größer 1 ist und n eine natürliche Zahl mit 1 ≤ n ≤ N ist.

Ein positiver aktiver Messbereich einer n-ten Referenzstrecke kann größeren Abstandswerten entsprechen bzw. größere Abstandswerte umfassen als ein negativer aktiver Messbereich einer (n+1)-ten Referenzstrecke. Ein positiver aktiver Messbereich der ersten (n=1) Referenzstrecke (und/oder jeder der positiven aktiven Messbereiche) kann größeren Abstandswerten entsprechen bzw. größere Abstandswerte umfassen als jeder der negativen aktiven Messbereiche der N Referenzstrecken.

Die Referenzstrecken können zumindest eine j-te Referenzstrecke umfassen, deren negativer aktiver Messbereich unmittelbar an einen positiven aktiven Messbereich einer i-ten Referenzstrecke angrenzt, wobei i, j natürliche Zahlen mit 1 ≤ i<j≤ N sind. Das heißt, die Referenzstrecken können zumindest eine j-te Referenzstrecke umfassen, deren negativer aktiver Messbereich einem Teilbereich des Abstandsbereichs entspricht, der unmittelbar an einen weiteren Teilbereich des Abstandsbereichs angrenzt, dem ein positiver aktiver Messbereich einer i-ten Referenzstrecke entspricht, wobei i, j natürliche Zahlen mit 1 ≤ i<j≤ N sind. Mit anderen Worten wird bei länger werdendem Messabstand von dem negativen aktiven Messbereich der j-ten Referenzstrecke in den positiven aktiven Messbereich der i-ten Referenzstrecke geschaltet, und umgekehrt bei kürzer werdendem Messabstand von dem positiven aktiven Messbereich der i-ten Referenzstrecke in den negativen aktiven Messbereich der j-ten Referenzstrecke. Die j-te Referenzstrecke kann auch als Umschaltreferenzstrecke bezeichnet werden, bei der bei länger werdendem Messabstand auf eine kürzere (d.h. i<j) Referenzstrecke geschaltet wird. Insbesondere kann die N-te Referenzstrecke die Umschaltreferenzstrecke sein, d.h. j=N. Die negativen aktiven Messbereiche der ersten Referenzstrecke, der zweiten Referenzstrecke, ... der j-ten Referenzstrecke, und anschließend die positiven aktiven Messbereiche der ersten Referenzstrecke, der zweiten Referenzstrecke, ... der j-ten Referenzstrecke können in der angegebenen Reihenfolge zunehmenden Abstandswerten des vorgegebenen Abstandsbereichs entsprechen.

Der Referenzarm kann K Gruppen von Referenzstecken umfassen, wobei K eine natürliche Zahl mit 1 ≤ K ist. Ein Messbereich einer (j+1)-ten Gruppe kann größeren Abstandswerten entsprechen bzw. größere Abstandwerte umfassen als ein Messbereich einer j-ten Gruppe, wobei j eine natürliche Zahl mit 1 ≤ j ≤ K ist. Jede Gruppe kann dieselbe Anzahl M von Referenzstrecken umfassen, d.h. K*M=N. Jede Gruppe von Referenzstrecken kann (genau) eine Umschaltreferenzstrecke umfassen. Die Gruppen ergänzen sich vorzugsweise so, dass der komplette Abstandsbereich abgedeckt ist.

Der Referenzarm kann zumindest eine Gruppe von M Referenzstecken umfassen, wobei M eine natürliche Zahl mit 1 ≤ M ≤ N ist. Der Referenzarm kann insbesondere mehrere Gruppen von Referenzstrecken umfassen, wobei die Gruppen dieselbe oder eine unterschiedliche Anzahl von Referenzstrecken umfassen. Beispielsweise kann der Referenzarm eine erste Referenzstrecke bzw. eine erste Gruppe mit nur einer Referenzstrecke sowie zumindest eine Gruppe mit mehreren (z.B. zwei, drei, ...) Referenzstrecken umfassen. Zwischen einem negativen aktiven Messbereich und einem positiven aktiven Messbereich einer m-ten Referenzstrecke können die negativen aktiven Messbereiche der (M-m) anderen Referenzstrecken der Gruppe und/oder die positiven aktiven Messbereiche der (m-1) anderen Referenzstrecken der Gruppe angeordnet sein, wobei m eine natürliche Zahl mit 1≤ m≤ M ist. Das heißt, zwischen dem negativen aktiven Messbereich und dem positiven aktiven Messbereich der m-ten Referenzstrecke können die negativen aktiven Messbereiche der (M-m) anderen Referenzstrecken angeordnet sein (d.h. der (m+1)-ten, ... M-ten Referenzstrecken), und/oder die (m-1) positiven aktiven Messbereiche der ersten, ...(m-1)-ten anderen Referenzstrecken. Ein positiver aktiver Messbereich der ersten (m=1) Referenzstrecke der Gruppe (und/oder jeder der positiven aktiven Messbereiche der M Referenzstrecken der Gruppe) kann größeren Abstandswerten entsprechen bzw. größere Abstandswerte umfassen als jeder der negativen aktiven Messbereiche der M Referenzstrecken der Gruppe. Ein positiver aktiver Messbereich einer m-ten Referenzstrecke der Gruppe kann kleineren Abstandswerten entsprechen bzw. kleinere Abstandswerte umfassen als ein positiver aktiver Messbereich einer (m+1)-ten Referenzstrecke. Entsprechend kann der negative aktive Messbereich einer m-ten Referenzstrecke der Gruppe kleineren Abstandswerten entsprechen bzw. kleinere Abstandswerte umfassen als der negative aktive Messbereich einer (m+1)-ten Referenzstrecke. Die negativen aktiven Messbereiche der ersten Referenzstrecke, der zweiten Referenzstrecke, ... der m-ten Referenzstrecke, der (m+1)-ten Referenzstrecke, ... der n-ten Referenzstrecke und anschließend die positiven aktiven Messbereiche der ersten Referenzstrecke, der zweiten Referenzstrecke, ... der m-ten Referenzstrecke, der (m+1)-ten Referenzstrecke, ... der M-ten Referenzstrecke können in der angegebenen Reihenfolge zunehmenden Abstandswerten des vorgegebenen Abstandsbereichs entsprechen.

Der Messbereich von jeder Referenzstrecke kann einen positiven Toleranzbereich aufweisen, der an einer oder an beiden Seiten des positiven aktiven Messbereichs dieser Referenzstrecke angrenzt, und/oder einen negativen Toleranzbereich, der an einer oder an beiden Seiten des negativen aktiven Messbereichs dieser Referenzstrecke angrenzt. Zwischen dem negativen und dem positiven Toleranzbereich kann der Totbereich angeordnet sein. Der negative und der positive Toleranzbereich jeder Referenzstrecke kann durch den Totbereich voneinander getrennt sein. Durch den positiven und/oder negativen Toleranzbereich kann sichergestellt werden, dass eine Messung im jeweiligen Messbereich trotz einer Bauteiltoleranz bzw. mechanischen Toleranz möglich ist.

Mit anderen Worten kann der Messbereich von jeder Referenzstrecke zumindest einen der folgenden Bereiche umfassen: einen unteren negativen Toleranzbereich, der an ein unteres Ende des negativen aktiven Messbereichs angrenzt und der kleineren Abstandswerten entspricht als der negative aktive Messbereich; und/oder einen oberen negativen Toleranzbereich, der an ein oberes Ende des negativen aktiven Messbereichs angrenzt und der größeren Abstandswerten entspricht als der negative aktive Messbereich; und/oder einen unteren positiven Toleranzbereich, der an ein unteres Ende des positiven aktiven Messbereichs angrenzt und der kleineren Abstandswerten entspricht als der positive aktive Messbereich; und/oder einen oberen positiven Toleranzbereich, der an ein oberes Ende des positiven aktiven Messbereichs angrenzt und der größeren Abstandswerten entspricht als der positive aktive Messbereich. Zwischen dem oberen negativen und unteren positiven Toleranzbereich kann der Totbereich angeordnet sein. Das heißt, zwischen dem negativen aktiven Messbereich und dem positiven aktiven Messbereich einer Referenzstrecke kann ein oberer negativer Toleranzbereich, der Totbereich und ein unterer positiver Toleranzbereich liegen. Der obere negative Toleranzbereich und der untere positive Toleranzbereich können an den Totbereich angrenzen bzw. der Totbereich kann zwischen dem oberen negativen Toleranzbereich und dem unteren positiven Toleranzbereich angeordnet sein. Der negative Toleranzbereich kann den unteren negativen Toleranzbereich und/oder den oberen negativen Toleranzbereich umfassen. Der positive Toleranzbereich kann den unteren positiven Toleranzbereich und/oder den oberen positiven Toleranzbereich umfassen.

Der positive und/oder negative Toleranzbereich einer Referenzstrecke kann von einem negativen oder positiven aktiven Messbereich zumindest einer anderen Referenzstrecke überlappt sein. Insbesondere kann die Gesamtheit aller Toleranzbereiche aller Referenzstrecken vollständig von aktiven Messbereichen der Referenzstrecken überlappt bzw. abgedeckt sein.

Gemäß einem Aspekt der vorliegenden Offenbarung umfasst ein Laserbearbeitungssystem einen Laserbearbeitungskopf, eine optische Kohärenztomografie-Vorrichtung für ein Laserbearbeitungssystem zur Abstandsmessung zu einem Objekt bzw. zu einem Werkstück gemäß einer der hierin beschriebenen Ausführungsformen sowie eine Steuervorrichtung zum Steuein des Laserbearbeitungssystems, insbesondere des Laserbearbeitungskopfs, und der optischen Kohärenztomografie-Vorrichtung, insbesondere des Schaltelements der optischen Kohärenztomografie-Vorrichtung. Die Steuervorrichtung kann also die Steuerung der optischen Kohärenztomografie-Vorrichtung umfassen.

Die Steuervorrichtung bzw. die Steuerung der optischen Kohärenztomografie-Vorrichtung kann eingerichtet sein, bei zunehmendem Abstand in eine kürzere Referenzstrecke zu schalten, d.h. in eine Referenzstrecke mit einem Messbereich, der kleinere Abstandwerte aufweist (als der Messbereich der bisherigen Referenzstrecke). D.h., die Steuervorrichtung bzw. die Steuerung der optischen Kohärenztomografie-Vorrichtung kann eingerichtet sein, bei zunehmendem Abstand von einem Objekt bzw. Werkstück von einer Referenzstrecke in eine kürzere Referenzstrecke zu schalten bzw. zu wechseln. Mit anderen Worten kann die Steuervorrichtung bzw. die Steuerung der optischen Kohärenztomografie-Vorrichtung eingerichtet sein, bei zunehmendem Abstand von einer j-ten Referenzstrecke in eine i-te Referenzstrecke zu schalten bzw. zu wechseln, wobei der Referenzarm N Referenzstrecke aufweist und i, j natürliche Zahlen mit 1 ≤ i < j ≤ N sind und eine i-te Referenzstrecke kürzer ist (d.h. eine kürzere optische Weglänge aufweist bzw. einen Messbereich aufweist, der kleinere Abstandswerte umfasst) als eine (i+1)-te Referenzstrecke. Insbesondere kann die Steuervorrichtung bzw. die Steuerung der optischen Kohärenztomografie-Vorrichtung eingerichtet sein, bei zunehmendem Abstand von einem negativen aktiven Messbereich einer j-ten Referenzstrecke in einen positiven aktiven Messbereich einer i-ten Referenzstrecke zu wechseln.

Der Laserbearbeitungskopf kann eine Scannervorrichtung mit zumindest einem Scanelement zum Auslenken eines Laserstrahls auf eine Vielzahl von Positionen auf einem Werkstück umfassen. Die Steuervorrichtung kann eingerichtet sein, die Scannervorrichtung zu steuern. Ein Strahlengang des Messlichtstrahls der optischen Kohärenztomografie-Vorrichtung kann vor der Scannervorrichtung (d.h. in Ausbreitungsrichtung des Laserstrahls vor der Scannervorrichtung) in einen Strahlengang des Laserstrahls eingekoppelt sein. Mit anderen Worten kann ein Strahlengang des Messlichtstrahls der optischen Kohärenztomografie-Vorrichtung über/via die Scannervorrichtung verlaufen.

Die Steuervorrichtung bzw. die Steuerung der optischen Kohärenztomografie-Vorrichtung kann z.B. ein PC bzw. eine Recheneinheit sein. Die Steuervorrichtung bzw. die Steuerung der optischen Kohärenztomografie-Vorrichtung kann eingerichtet sein, mittels des Schaltelements zwischen den Referenzstrecken hin und her zu schalten, beispielsweise zwischen einem positiven aktiven Messbereich einer Referenzstrecke und einem negativen aktiven Messbereich einer anderen Referenzstecke.

Die Steuervorrichtung bzw. die Steuerung der optischen Kohärenztomografie-Vorrichtung kann eingerichtet sein, in Abhängigkeit von einer Einstellung bzw. Position des Scanelements mittels des Schaltelements zwischen den Referenzstrecken hin und her zu schalten bzw. eine Referenzstrecke auszuwählen. Die Steuervorrichtung bzw. die Steuerung der optischen Kohärenztomografie-Vorrichtung kann eingerichtet sein, entsprechend einem Scanbefehl zur Einstellung des Scanelements der Scannervorrichtung eine der Referenzstrecken zur Abstandsmessung auszuwählen. In einem Beispiel kann die Steuervorrichtung eingerichtet sein, mittels eines Scanbefehls die Scannervorrichtung anzusteuern bzw. mittels eines Scanbefehls das Scanelement einzustellen, z.B. um den Laserstrahl auf eine bestimmte Position auf dem Werkstück zu richten. Die Steuervorrichtung bzw. die Steuerung der optischen Kohärenztomografie-Vorrichtung kann ferner eingerichtet sein, um basierend auf dem Scanbefehl eine der Referenzstrecken auszuwählen bzw. in eine der Referenzstrecken zu schalten. Die Scannervorrichtung kann jedoch auch mittels eines Scanbefehls von einer anderen Einheit eingestellt bzw. gesteuert werden. Die Steuervorrichtung bzw. die Steuerung der optischen Kohärenztomografie-Vorrichtung kann eingerichtet sein, bei einer aufgrund einer Positionsänderung des Scanelements zunehmenden optischen Weglänge von einem negativen Messbereich einer längeren Referenzstrecke in einen positiven Messbereich einer anderen kürzeren Referenzstrecke zu schalten.

Das Laserbearbeitungssystem und/oder die optische Kohärenztomografie-Vorrichtung kann eine Auswertevorrichtung zum Bestimmen des Abstands basierend auf einer Interferenz zwischen einem vom Objekt reflektierten Anteil des Messlichtstrahls und dem Referenzstrahl, insbesondere basierend auf einem Interferenzsignal des Detektors, umfassen. Die Auswertevorrichtung kann in der Steuervorrichtung des Laserbearbeitungssystems bzw. in der Steuerung der optischen Kohärenztomografie-Vorrichtung enthalten sein. Die optische Kohärenztomografie-Vorrichtung kann ferner einen optischen Kombinierer zum Überlagern von vom Objekt reflektierten Anteil des Messlichtstrahls und dem Referenzstrahl zur interferometrischen Bestimmung des Abstands des Objekts umfassen. Der optische Kombinierer kann auch der Strahlteiler sein.

Eine Null-Position des Scanelements, d.h. eine Position ohne Auslenkung bzw. eine Position, bei der der Laserstrahl parallel bzw. koaxial zur optischen Achse der Fokussieroptik durch selbige verläuft, kann dem kleinsten Abstandswert des vorgegebenen Abstandsbereichs entsprechen bzw. im negativen (oder positiven) aktiven Messbereich der ersten (bzw. kürzesten) Referenzstrecke des Referenzarms liegen. Ein Zusammenhang zwischen einer Positionsänderung des Scanelements in Bezug auf die Null-Position und einer dadurch bedingten Änderung des Abstands zum Objekt bzw. Werkstück kann in der Steuervorrichtung bzw. in der Steuerung der optischen Kohärenztomografie-Vorrichtung und/oder in der Auswertevorrichtung hinterlegt bzw. gespeichert sein. Zusätzlich oder alternativ kann für jede Referenzstrecke ein Offset-Wert in der Steuervorrichtung bzw. in der Steuerung der optischen Kohärenztomografie-Vorrichtung und/oder in der Auswertevorrichtung hinterlegt bzw. gespeichert sein. Der Offset-Wert kann von der Auswertevorrichtung bei der Bestimmung des Abstands berücksichtigt werden.

Die Auswertevorrichtung kann eingerichtet sein, den Abstand basierend auf einer Einstellung des Scanelements (z.B. dem Scanbefehl) bzw. basierend auf Scanner-Daten bezüglich der Position des Laserstrahls bzw. des Messlichtstrahls im Arbeitsfeld und basierend auf dem Interferenzsignal des Detektors oder basierend auf einer Interferenz zwischen einem vom Objekt reflektierten Anteil des Messlichtstrahls und dem Referenzstrahl, d.h. basierend auf einer Überlagerung von einem vom Objekt reflektierten Anteil des Messlichtstrahls aus dem Messarm und dem Referenzstrahl aus dem entsprechend ausgewähltem Referenzarm (bzw. aus der ausgewählten bzw. eingeschalteten Referenzstrecke des Referenzarms), zu bestimmen.

Die Steuervorrichtung kann eingerichtet sein, eine Ausrichtung (insbesondere eine Neigung und/oder dreidimensionale Orientierung) des Laserbearbeitungskopfs bezüglich des Werkstücks basierend auf Abstandswerten zu bestimmen, die während eines Scannens des Messlichtstrahls über das Werkstück mittels der Scannervorrichtung von der optischen Kohärenztomografie-Vorrichtung ermittelt worden sind. Das Scannen kann über einen gesamten Scanbereich der Scannervorrichtung erfolgen, z.B. als Linearscan oder Kreuzscan oder Spiralscan oder als mäandernder Scan. Wenn beispielsweise eine Position des Laserstrahls bzw. des Messlichtstrahls auf dem Werkstück in kartesischen Koordinaten (z.B. mit einem Ursprung entsprechend der Null-Position) angegeben werden, kann für das Scannen eine x-Koordinate von 0 auf einen Maximalwert +xₘₐₓ, oder von - xₘₐₓ bis + xₘₐₓ verfahren werden. Zusätzlich oder alternativ kann für das Scannen eine y-Koordinate von 0 auf einen Maximalwert +yₘₐₓ, oder von - yₘₐₓ bis + yₘₐₓ verfahren werden.

Die Steuervorrichtung kann eingerichtet sein, eine Zuordnung von Referenz-Höhenwerten, die z.B. bei Kalibration in einer vorgegebenen bzw. gewünschten Arbeitsebene bzw. Referenzebene aufgenommen worden sind, zu den entsprechenden Positionen in dem Scanbereich bzw. Scanfeld der Scannervorrichtung vorzunehmen. Die Referenz-Höhenwerte können auch als Kalibrationsdaten bezeichnet werden. Die Steuervorrichtung kann eingerichtet sein, bei vorgegebener Scannerposition durch Nutzung der Daten aus der Kalibration und aus der Messung am Werkstück an dieser Scannerposition einen relativen Abstand (beispielsweise bzgl. einer Referenzebene, z.B. der Arbeitsebene) zu dem zu bearbeitenden Werkstück zu bestimmen. Die Steuervorrichtung kann eingerichtet sein, einen tatsächlichen bzw. absoluten Abstand zu dem zu bearbeitenden Werkstück bei vorgegebener Scannerposition durch Nutzung der Daten aus der Kalibration (bzw. der Differenz zur Referenzebene) und der Messung am Werkstück an dieser Scannerposition zu bestimmen. Die Messung kann punktuell sein, kann einen Weg abfahren (Linie, Kreuz, Kreis, Spirale etc.), oder ein Scan einer Fläche sein.

In einem Ausführungsbeispiel können in einem Verfahren zur Einrichtung der Vorrichtung in einem Laserbearbeitungssystem folgende Schritte ausgeführt werden: Definieren einer Referenzebene (z.B. die Arbeitsebene) des Laserbearbeitungssystems, und Kalibrieren der optischen Kohärenztomografie-Vorrichtung durch Zuordnen von Referenz-Höhenwerten zu den entsprechenden Positionen in dem Scanbereich. Die Referenzebene bzw. Arbeitsebene des Laserbearbeitungssystems kann die Ebene sein, auf die das Laserbearbeitungssystem ausgerichtet ist, beispielsweise die Brennebene eines Objektivs bzw. einer Fokussieroptik des Laserbearbeitungssystems. Beim Kalibrieren kann für jede Position auf der Referenzebene in dem Scanbereich ein Referenz-Höhenwert zugewiesen werden, um eine Differenz zwischen einem Messwert an dieser Position und dem tatsächlichen Höhenwert, d.h. einen Offset, zu bestimmen. Bei einer Messung an dem Objekt bzw. Werkstück kann eine Abweichung zur Referenzebene und/oder ein (relativer oder absoluter) Abstand bestimmt werden, indem der Messwert und die Kalibrationsdaten für die jeweilige (Mess)position im Scanfeld berücksichtigt werden.

Die Steuervorrichtung kann eingerichtet sein, Bearbeitungsparameter (z.B. Schweißparameter, insbesondere der Kollimation des heißen Strahls, Laserleistung, Fokuslage, etc.) anhand der durchgeführten Messung bzw. anhand des bestimmten Abstands anzupassen, insbesondere vor der Laserbearbeitung an diesem Punkt bzw. an dieser Scanposition. Die Steuervorrichtung kann eingerichtet sein, Systemparameter (Fokussierung einer Kamera, Skalierung von Bilddaten, etc.) anhand der Messung bzw. anhand des bestimmten Abstands anzupassen.

Durch opto-mechanischen Eigenschaften des Scanner-Systems kann eine Auslenkung des zumindest einen Scanelements, z.B. von Scanner-Spiegeln, eine Veränderung der optischen Weglänge zur Zielebene, d.h. eine Veränderung des Abstands, bewirken. Dadurch kann eine Kalibration des Messsignals bzw. OCT-Signals bzw. des Abstandswerts in Abhängigkeit der Auslenkung (laterale Position) bzw. der Scanposition notwendig sein. Somit kann eine Kalibration der OCT-Vorrichtung für das Laserbearbeitungssystem bzw. für die Scannervorrichtung in der Steuervorrichtung des Laserbearbeitungssystems und/oder in der Steuerung der optischen Kohärenztomografie-Vorrichtung hinterlegt bzw. gespeichert sein. Zusätzlich oder alternativ kann ein Model für eine Änderung der optischen Weglänge bzw. des Abstands in Abhängigkeit von der Scanposition für das Laserbearbeitungssystem bzw. für die Scannervorrichtung in der Steuervorrichtung des Laserbearbeitungssystems und/oder in der Steuerung der optischen Kohärenztomografie-Vorrichtung hinterlegt bzw. gespeichert sein. Damit kann eine Zuordnung der Referenzstrecken zu Teilbereichen im Scanbereich bzw. im vorgegebenen Abstandsbereich festgelegt sein. Ferner können diverse Parameter des Gesamtsystems bestimmt werden.

In der vorliegenden Offenbarung wird als Arbeits- bzw. Scanbereich ein Bereich bezeichnet, in den der Laserstrahl bzw. der Messlichtstrahl mittels der Scannervorrichtung bezüglich des Laserbearbeitungskopfs gerichtet werden kann. Der vorgegebene Abstandsbereich bezeichnet einen Bereich vom kleinsten mittels der optischen Kohärenztomografie-Vorrichtung messbaren Abstandswert bis zum größten mittels der optischen Kohärenztomografie-Vorrichtung messbaren Abstandswert. Vorzugsweise entspricht die Position des Scanelements, bei der der Laserstrahl nicht ausgelenkt wird (sogenannte Null-Position des Scanelements), einem Ursprung eines Polarkoordinatensystems. Eine optische Weglängenänderung, die auf einer Positionsänderung des Scanelements basiert, kann als radiale Länge darstellbar sein. Die Null-Position des Scanelements, d.h. die Position bzw. Einstellung, bei der der Laserstrahl nicht ausgelenkt wird, kann einer kürzesten optischen Weglänge, d.h. einem kürzesten Abstand zum Werkstück bzw. zu einem Objekt, entsprechen. Die Steuervorrichtung bzw. die Steuerung der optischen Kohärenztomografie-Vorrichtung kann eingerichtet sein, bei der Null-Position des Scanelements die erste bzw. kürzeste Referenzstrecke einzustellen bzw. in die erste bzw. kürzeste Referenzstrecke zu schalten. Der vorgegebene Abstandsbereich kann zumindest einen Teil eines Bereichs der optischen Weglängenänderung, die durch Positionsänderung des Scanelements erzielbar ist, entsprechen.

Der Laserbearbeitungskopf kann ferner eine Fokussieroptik, insbesondere ein F-Theta Objektiv, zum Fokussieren des Laserstrahls und/oder des Messlichtstrahls aufweisen. Die Fokussieroptik kann (in Bezug auf die Strahlausbreitungsrichtung des Laserstrahls) nach der Scannervorrichtung angeordnet sein.

Der Laserbearbeitungskopf kann ein Laserbearbeitungskopf zum Durchführen eines Bearbeitungsprozesses, insbesondere zum Laserschneiden, Laserschweißen, Laserlöten, Laserbohren etc., an dem Werkstück mittels des Laserstrahls sein.

Das Werkstück kann insbesondere ein metallisches Werkstück sein. Das Laserbearbeitungssystem bzw. der Laserbearbeitungskopf kann zur Bearbeitung eines metallischen Werkstücks eingerichtet sein. Das Objekt kann das Werkstück sein.

### Kurzbeschreibung der Figuren

Ausführungsbeispiele der Offenbarung sind in den Figuren dargestellt und werden im Folgenden näher beschrieben. Es zeigen:
Figur 1 eine optische Kohärenztomografie-Vorrichtung gemäß einer Ausführungsform der vorliegenden Erfindung;
Figur 2A schematisch einen herkömmlicherweise verwendeten Messbereich einer Referenzstrecke und Figur 2B einen herkömmlichen Aufbau eines Referenzarms mit mehreren Referenzstrecken;
Figur 3 schematisch einen erfindungsgemäß verwendeten Messbereich einer Referenzstrecke;
Figur 4 einen Aufbau eines Referenzarms mit mehreren Referenzstrecken gemäß einer Ausführungsform der vorliegenden Erfindung;
Figur 5 schematisch einen Aufbau eines Messbereichs einer Referenzstrecke mit einem negativen und einem positiven Toleranzbereich gemäß einer Ausführungsform der vorliegenden Erfindung;
Figuren 6A und 6B jeweils einen Aufbau eines Referenzarms mit mehreren Referenzstrecken gemäß Ausführungsformen der vorliegenden Erfindung;
Figur 7 ein Laserbearbeitungssystem mit einer optischen Kohärenztomografie-Vorrichtung gemäß einer Ausführungsform der vorliegenden Erfindung;
Figur 8A und 8B illustrieren Situationen bei der Laserbearbeitung durch einen Scanner-Laserbearbeitungskopf;
Figur 9 zeigt eine Berechnung für einen möglichen Verlauf einer OCT-Distanzmessung bei vier Referenzstrecken;
Figur 10 illustriert komplexe Offsets im Messsignal mit diversen Abhängigkeiten, insbesondere von einer Scanposition;
Figur 11 zeigt eine Aufteilung eines Scanbereichs auf Schalterstellungen des Schaltelements; und
Figur 12 zeigt einen Positionierfehler einer Kalibrierplatte, z.B. bei geneigter Werkstückauflage.

### Ausführliche Beschreibung der Figuren

Im Folgenden werden, sofern nicht anders vermerkt, für gleiche und gleichwirkende Elemente dieselben Bezugszeichen verwendet.

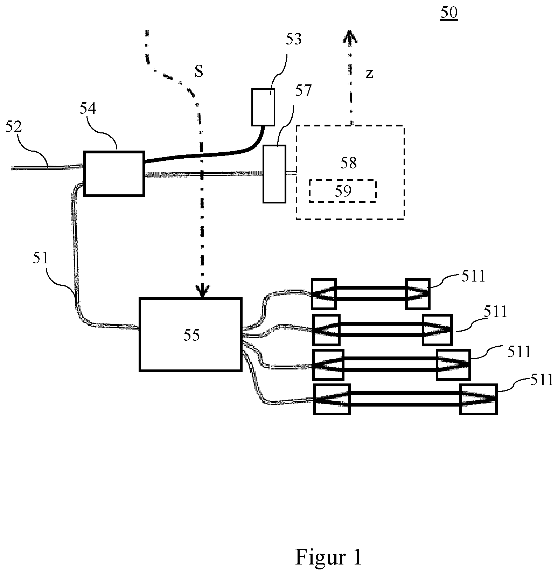

Figur 1 zeigt eine optische Kohärenztomografie-Vorrichtung 50, im Folgenden auch OCT-Vorrichtung, gemäß einer Ausführungsform der vorliegenden Erfindung. Die OCT-Vorrichtung 50 ist eingerichtet, um Abstände zu einem Objekt, beispielsweise eine Werkstückoberfläche oder ein Bauteil, in einem vorgegebenen Abstandsbereich O zu messen. Die OCT-Vorrichtung 50 umfasst einen Messarm 52 zum Einstrahlen eines Messlichtstrahls auf das Objekt bzw. zum Leiten von vom Objekt reflektiertem Messlicht und einen Referenzarm 51 zum Führen des Referenzstrahls, wobei der Referenzarm 51 zwei oder mehr Referenzstrecken 511 mit verschiedenen optischen Weglängen, d.h. mit unterschiedlichen Messbereichen MB umfasst. Die OCT-Vorrichtung 50 weist einen Detektor 57 eingerichtet zum Erfassen eines Interferenzsignals. Ferner ist ein steuerbares Schaltelement 55 zum Schalten zwischen den Referenzstrecken 511 des Referenzarms 51 vorgesehen. Das Schaltelement 55 kann einen Faserumschalter, ein MEMS basiertes Schaltelement, Beckhoff I/O Klemmen, etc. umfassen. Basierend auf einem Schaltsignal S kann das Schaltelement 55 eine der Referenzstrecken 511 auswählen, d.h. für die Abstandsmessung aktiv schalten bzw. den Referenzstrahl in diese Referenzstrecke leiten. Optional kann die OCT-Vorrichtung 50 einen OCT-Prozessor 58 umfassen, der auch als Steuerung der OCT-Vorrichtung 50 bezeichnet werden kann. Der OCT-Prozessor 58 kann eine Auswerteeinheit umfassen. Der Detektor 57 kann mit dem OCT-Prozessor 58 bzw. mit der Auswerteeinheit verbunden sein, um das Interferenzsignal an diese zu liefern. Der OCT-Prozessor 58 kann beispielsweise eingerichtet sein, ein OCT-Signal bzw. Messsignal oder einen Abstandswert z basierend auf einem vorgegebenen Offset der ausgewählten Referenzstrecke 511 sowie basierend auf einer Überlagerung bzw. Interferenz zwischen dem vom Objekt reflektierten Anteil des Messlichtstrahls aus dem Messarm 52 und dem Referenzstrahl aus dem Referenzarm 51 auszugeben. Alternativ oder zusätzlich kann der OCT-Prozessor 58 eingerichtet sein, das Schaltsignal S an das Schaltelement 55 auszugeben, um eine bestimmte Referenzstrecke 511 einzustellen. Der OCT-Prozessor 58 (ggf. mit der Auswerteeinheit) kann gesondert vorgesehen sein oder in eine Steuerung eines Laserbearbeitungssystems bzw. eines Laserbearbeitungskopfs integriert sein.

Die OCT-Vorrichtung 50 umfasst ferner eine Messlichtquelle 53 zum Erzeugen von Messlicht und ein optisches Element 54 zum Aufteilen des Messlichts in den Referenzstrahl und den Messlichtstrahl. Das optische Element 54 kann zumindest ein Strahlteiler, Faserkoppler, Prisma, etc. umfassen oder sein.

Die OCT-Vorrichtung 50 kann ferner eine Auswerteeinheit 59 umfassen, die eingerichtet ist, den Abstand basierend auf einer Überlagerung eines vom Werkstück bzw. Bauteil reflektierten Anteil des Messlichtstrahls 525 aus dem Messarm 52 und dem Referenzstrahl aus dem Referenzarm 51 sowie basierend auf der Schaltposition bzw. auf der ausgewählten Referenzstrecke 511 zu bestimmen. Wie in Figur 1 gezeigt kann die Auswerteeinheit 59 in die OCT-Steuerung 58 integriert sein, ist aber nicht darauf beschränkt. Der Detektor 57 kann mit der Auswerteeinheit 59 verbunden sein, um das Interferenzsignal an diese zu liefern.

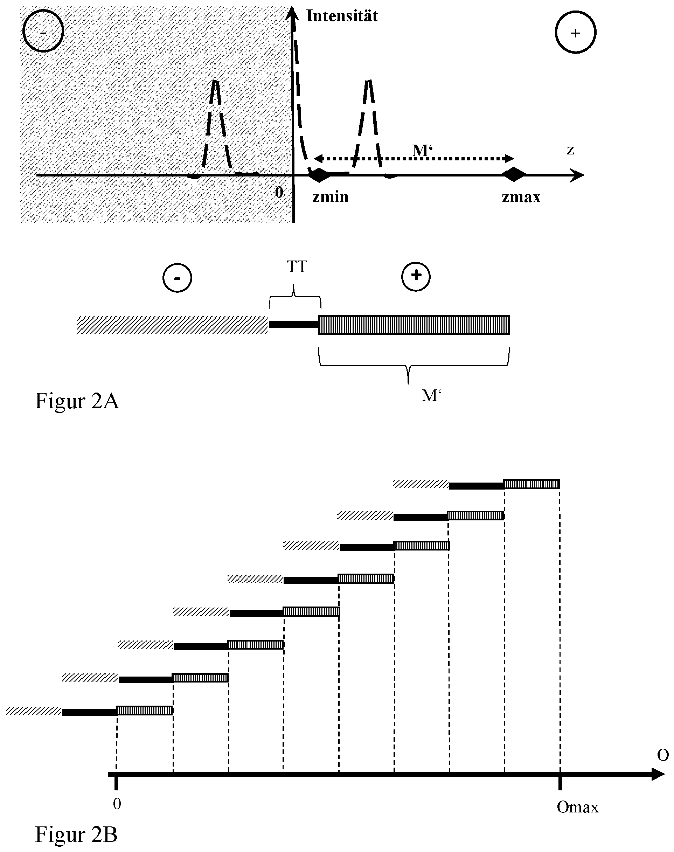

In Figur 2A ist ein herkömmlicherweise verwendeter Messbereich M' eines Referenzarms bzw. einer Referenzstrecke veranschaulicht. In der Regel misst eine OCT-Vorrichtung eine Abstandsdifferenz zwischen der optischen Weglänge des Messarms und der des Referenzarms. Die optische Weglänge des Messarms kann beispielsweise einem Abstand zu einem Objekt bzw. zu einem Bauteil bzw. zu einer Werkstückoberfläche bzw. zu einer Arbeitsebene entsprechen. Als "negativer" Messbereich gilt, wenn der Referenzarm länger ist als der Messarm, und entsprechend gilt als "positiver" Messbereich, wenn der Referenzarm kürzer ist als der Messarm. Diese Teile des Messbereichs sind nach einer Fouriertransformation, die im Allgemeinen zur Auswertung des OCT-Signals durchgeführt wird, nicht unterscheidbar und können vom OCT-Prozessor nicht abgebildet werden. Das OCT-Signal bzw. der Abstandswert z kann also zwei möglichen Werten entsprechen: z= | RL-ML | , mit RL: optische Weglänge des Referenzarms und ML: optische Weglänge des Messarms (d.h. Abstand zum Objekt). Um eine eindeutige Messung zu gewährleisten, wird herkömmlicherweise nur ein einseitiger (z.B. der positive) Messbereich zur Abstandsmessung verwendet, d.h. der schraffierte (z.B. negative) Bereich existiert nicht und bildet nur schematisch die Symmetrie um den Nullpunkt ab. Um den Nullpunkt besteht zudem das Problem, dass man bei einer Differenz von Null eine Singularität im Signal hat und dadurch der Bereich um Null herum nicht als Messbereich zu Verfügung steht. Dieser Bereich wird auch als Totbereich TT bezeichnet und liegt zwischen dem negativen und positiven Teilen des Messbereichs. Somit ist in den bekannten OCT-Vorrichtungen der aktive bzw. einsetzbare Messbereich M' als der Bereich im positiven (oder negativen) Messbereich definiert, in dem ein Signal bzw. ein Peak erkennbar ist. Die Grenzen des aktiven Messbereichs M' sind in Figur 2A als zₘᵢₙ und zₘₐₓ angegeben.

In Figur 2B ist ein herkömmlicher Aufbau eines Referenzarms mit mehreren Referenzstrecken veranschaulicht. In den bekannten OCT-Vorrichtungen werden die aktiven Messbereiche M' der Referenzstrecken aneinander angrenzend angeordnet, um einen vorgegebenen Abstandsbereich O abzudecken. Wie oben erläutert werden als aktive Messbereiche M' entweder die positiven oder die negativen Teile der Messbereiche verwendet.

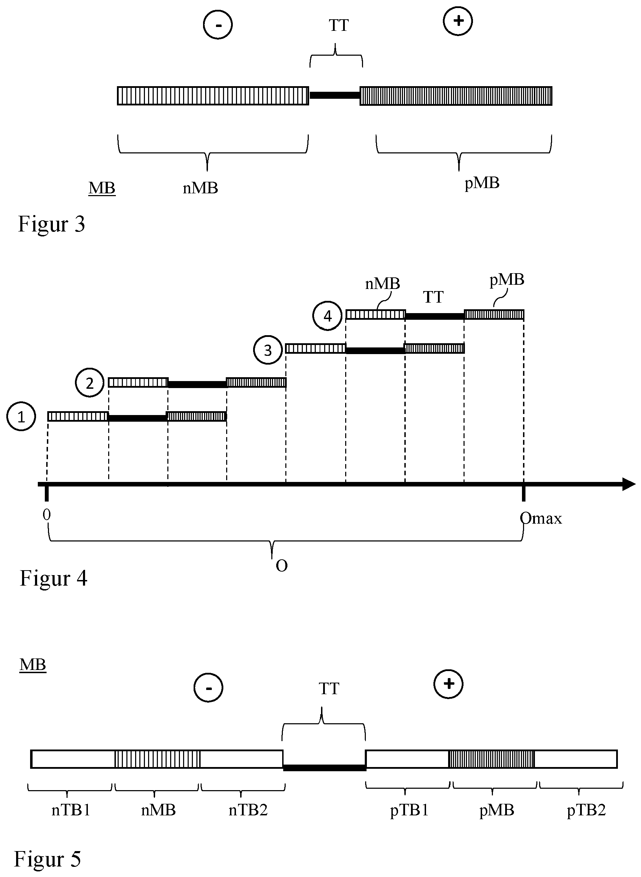

Figur 3 veranschaulicht den Messbereich MB einer Referenzstrecke 511 gemäß einer Ausführungsform der vorliegenden Erfindung. Der Messbereich MB, d.h. der Bereich, in dem ein Abstands-Signal bzw. ein Peak erkennbar ist, umfasst sowohl einen negativen aktiven Messbereich nMB als auch einen positiven aktiven Messbereich pMB, die zusammen als aktiver Messbereich aMB bezeichnet werden können. Zwischen dem negativen aktiven Messbereich nMB und dem positiven aktiven Messbereich pMB ist der Totbereich TT angeordnet, in dem kein Signal bzw. Peak erkennbar ist. In dem hier gezeigten Ausführungsbeispiel können der negative aktive Messbereich nMB und der positive aktive Messbereich pMB unmittelbar an den Totbereich TT angrenzen.

In Figur 4 ist ein Aufbau eines Referenzarms 51 einer OCT-Vorrichtung 50 gemäß einer Ausführungsform der vorliegenden Erfindung gezeigt. Die Totbereiche TT von jeder Referenzstrecke 511 werden durch einen negativen oder positiven aktiven Messbereich nMB bzw. pMB einer anderen Referenzstrecke 511 abgedeckt bzw. überlappt. Somit ist eine lückenlose Messung in dem vorgegebenen Abstandsbereich O, d.h. von 0 bis Omax, möglich. Die Nummern der Referenzstrecken 511 können Schalterstellungen bzw. Schaltposition des Schaltelements 55 entsprechen. Die Referenzstrecken 511 sind entsprechend ihrer optischen Länge angeordnet, d.h. ein Messbereich MB von Referenzstrecke 1 enthält kleinere Abstandswerte als ein Messbereich MB von Referenzstrecke 2, der wiederum kleinere Abstandswerte als ein Messbereich MB von Referenzstrecke 3 enthält, der wiederum kleinere Abstandswerte als ein Messbereich MB von Referenzstrecke 4 enthält. Anders gesagt entspricht ein Messbereich MB von Referenzstrecke 4 größeren Abstandwerten als ein Messbereich MB von Referenzstrecke 3, der wiederum größeren Abstandwerten entspricht als ein Messbereich MB von Referenzstrecke 2, der wiederum größeren Abstandswerten entspricht als ein Messbereich MB von Referenzstrecke 1. Insbesondere enthält ein negativer aktiver Messbereich nMB von Referenzstrecke 1 kleinere Abstandswerte als ein negativer aktiver Messbereich nMB von Referenzstrecke 2, der wiederum kleinere Abstandswerte als ein negativer aktiver Messbereich nMB von Referenzstrecke 3 enthält, der wiederum kleinere Abstandswerte als ein negativer aktiver Messbereich nMB von Referenzstrecke 4 enthält. Entsprechend enthält ein positiver aktiver Messbereich pMB von Referenzstrecke 1 kleinere Abstandswerte als ein positiver aktiver Messbereich pMB von Referenzstrecke 2, der wiederum kleinere Abstandswerte als ein positiver aktiver Messbereich pMB von Referenzstrecke 3 enthält, der wiederum kleinere Abstandswerte als ein positiver aktiver Messbereich pMB von Referenzstrecke 4 enthält.

In dem in Figur 4 gezeigten Beispiel sind zwei Gruppen mit je zwei Referenzstrecken 1 und 2 bzw. 3 und 4 gezeigt, wobei der Totbereich TT jeder Referenzstrecke einer Gruppe durch einen negativen aktiven Messbereich nMB bzw. positiven aktiven Messbereich pMB einer anderen Referenzstrecke 511 derselben Gruppe überlappt ist. Die Messbereiche der Gruppen grenzen aneinander an. Mit anderen Worten grenzt ein positiver aktiver Messbereich pMB der längsten Referenzstrecke (hier Referenzstrecke 2) der ersten Gruppe unmittelbar an den negativen aktiven Messbereich nMB der kürzesten Referenzstrecke (hier Referenzstrecke 3) der zweiten Gruppe an. Selbstverständlich kann auch nur eine Gruppe oder mehr als zwei Gruppen, und/oder mehr als zwei Referenzstrecken pro Gruppe verwendet werden, um den vorgegebenen Abstandsbereich O abzudecken. Hierbei sind die negativen aktiven Messbereiche nMB der Referenzstrecken einer Gruppe unmittelbar aufeinanderfolgend angeordnet, und die positiven aktiven Messbereiche pMB der Referenzstrecken einer Gruppe sind unmittelbar aufeinanderfolgend angeordnet. Jede Gruppe kann zumindest eine Referenzstrecke umfassen, deren negativer aktiver Messbereich nMB unmittelbar an einen positiven aktiven Messbereich pMB einer anderen Referenzstrecke dieser Gruppe angrenzt.

Bei zunehmendem Abstand wird zunächst von Referenzstrecke 1 in Referenzstrecke 2 geschaltet, um jeweils den negativen aktiven Messbereich nMB dieser Referenzstrecken zu nutzen. Bei weiter zunehmendem Abstand wird von Referenzstrecke 2 zurück zu Referenzstrecke 1 geschaltet, um nun zunächst den positiven aktiven Messbereich pMB der Referenzstrecke 1 und bei weiter zunehmendem Abstand den positiven aktiven Messbereich pMB der Referenzstrecke 2 zu nutzen. Anschließend wird auf Referenzstrecke 3 der zweiten Gruppe geschaltet, um den negativen aktiven Messbereich nMB derselben zu nutzen, etc.. Gemäß der vorliegenden Erfindung ist das Schaltelement 55 also eingerichtet, bei zunehmendem Abstand in eine kürzere Referenzstrecke zu schalten, um deren positiven aktiven Messbereich pMB zu nutzen.

Wie oben erläutert besteht bei einem OCT-Messprinzip das Problem, dass bei einer Differenz der optischen Weglängen von Null (d.h. wenn der optische Weg des Referenzarms und der des Messarms gleich sind) eine Singularität im Signal auftritt und daher der Messbereich um Null herum für eine Messung nicht zur Verfügung steht ("Totbereich"). Dieser Bereich wird durch Umschaltung zu einer anderen Referenzstrecke überbrückt, was eine durchgehende Vermessung innerhalb des vorgegebenen Abstandsbereichs ermöglicht.

Figur 5 veranschaulicht den Messbereich MB einer Referenzstrecke 511 gemäß einer weiteren Ausführungsform der vorliegenden Erfindung. Neben dem negativen aktiven Messbereich nMB und dem positiven aktiven Messbereich pMB umfasst der Messbereich MB einen negativen Toleranzbereich nTB, der an zumindest ein Ende des negativen aktiven Messbereichs nMB angrenzt, und einen positiven Toleranzbereich pTB, der an zumindest ein Ende des positiven aktiven Messbereichs pMB angrenzt. Der negative Toleranzbereich nTB kann einen unteren negativen Toleranzbereich n TB1, der an einem unteren Ende des negativen aktiven Messbereichs nMB angrenzt, und/oder einen oberen negativen Toleranzbereich nTB2 umfassen, der an einem oberen Ende des negativen aktiven Messbereichs nMB angrenzt bzw. der zwischen dem negativen aktiven Messbereich nMB und dem Totbereich TT angeordnet ist. Ebenso kann der positive Toleranzbereich pTB einen unteren positiven Toleranzbereich pTB1, der an einem unteren Ende des positiven aktiven Messbereichs pMB angrenzt bzw. der zwischen dem Totbereich TT und dem positiven aktiven Messbereich pMB angeordnet ist, und/oder einen oberen positiven Toleranzbereich pTB2 umfassen, der an einem oberen Ende des positiven aktiven Messbereichs pMB angrenzt.

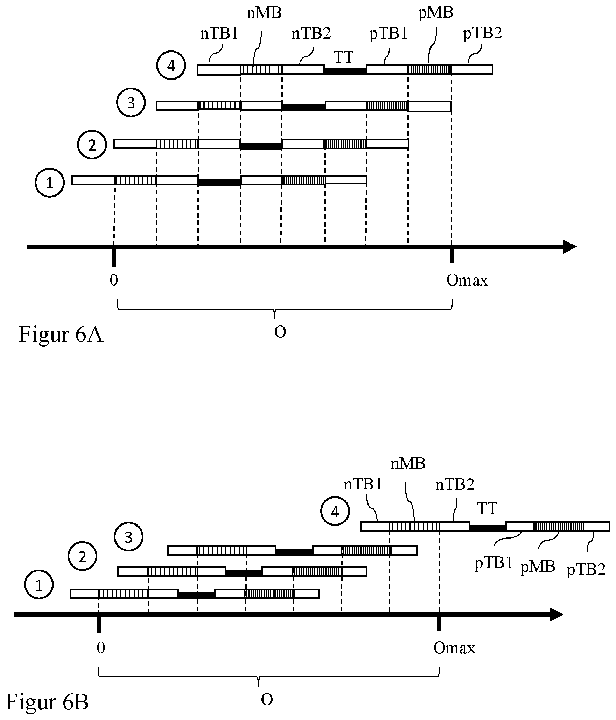

In Figur 6A und 6B ist ein Aufbau eines Referenzarms 51 einer OCT-Vorrichtung 50 gemäß weiteren Ausführungsformen der vorliegenden Erfindung gezeigt. In Figur 6A weist der Referenzarm 51 eine Vielzahl von Referenzstrecken 511 mit der in Figur 5 gezeigten Konfiguration auf. Die Vielzahl von Referenzstrecken 511 bilden eine Gruppe. Die negativen und positiven aktiven Messbereiche nMB bzw. pMB sind jeweils von negativen bzw. positiven Toleranzbereichen n TB1, nTB2 bzw. pTB1, pTB2 eingerahmt. Zwischen einem oberen negativen Toleranzbereich nTB2 und einem unteren positiven Toleranzbereich pTB1 ist der Totbereich TT angeordnet. Auch in diesem Beispiel decken die negativen und positiven aktiven Messbereiche nMB bzw. pMB der Referenzstrecken 511 den Messbereich O lückenlos ab. Zumindest die an den Totbereich TT angrenzenden Toleranzbereiche jeder Referenzstrecke 511, d.h. der obere negative Toleranzbereich nTB2 und der untere positive Toleranzbereich pTB1, werden hierbei von negativen bzw. positiven aktiven Messbereichen nMB bzw. pMB zumindest einer anderen Referenzstrecke 511 abgedeckt bzw. überlappt. Die absolute Länge von zumindest einem dieser Toleranzbereiche, n TB1, nTB2, pTB1, pTB2 kann einer erwarteten bzw. vorgegebenen Bauteiltoleranzen bzw. mechanischen Toleranzen Δt entsprechen. Diese sogenannte Bauteiltoleranzen Δt können beispielsweise +/- 0,25mm bis +/- 5 mm betragen. In Figur 6B ist ebenfalls ein Referenzarm 51 mit vier Referenzstrecken 1, ..., 4 (N=4) gezeigt. Die Referenzstrecken in Figur 6B sind jedoch in zwei Gruppen (K=2) von Referenzstrecken angeordnet, wobei die erste Gruppe (k=1) drei Referenzstrecken (M₁=3) umfasst und die zweite Gruppe (k=2) eine einzelne Referenzstrecke (M₂=1). In dieser Ausführungsform wird der positive aktive Messbereich pMB der Referenzstrecke 4 nicht verwendet. Auch wenn die einzelne Referenzstrecke 4 entsprechend dem Ende des Messbereichs O angeordnet ist, das den größten Werten entspricht, kann zusätzlich oder alternativ eine einzelne Referenzstrecke entsprechend dem Anfang des Messbereichs O angeordnet sein, das den kleinsten Werten entspricht (d.h. als erste Referenzstrecke des Referenzarms).

Auf diese Weise kann ein weiteres Problem gelöst werden, wenn in der Nähe des Totbereichs ein Bauteil unbekannter Höhe vermessen werden soll: Es kann nicht eindeutig festgestellt werden, in welchem Messbereich man sich gerade befindet, und somit ist es unklar, ob die aktuelle Messstrecke kleiner oder größer als die Referenzstrecke ist. Dieses Problem kann durch die Reduktion des Messbereiches gelöst werden: Mit den Toleranzbereichen wurden Messbereiche für die Höhenvermessung von Bauteilen reserviert und die Möglichkeit einer Verwechslung wurde somit reduziert, bzw. an jeder Position (x; y) kann bei gegebenen Bauteiltoleranzen Δt eine eindeutige Höhen-Position des Bauteils bestimmt werden.

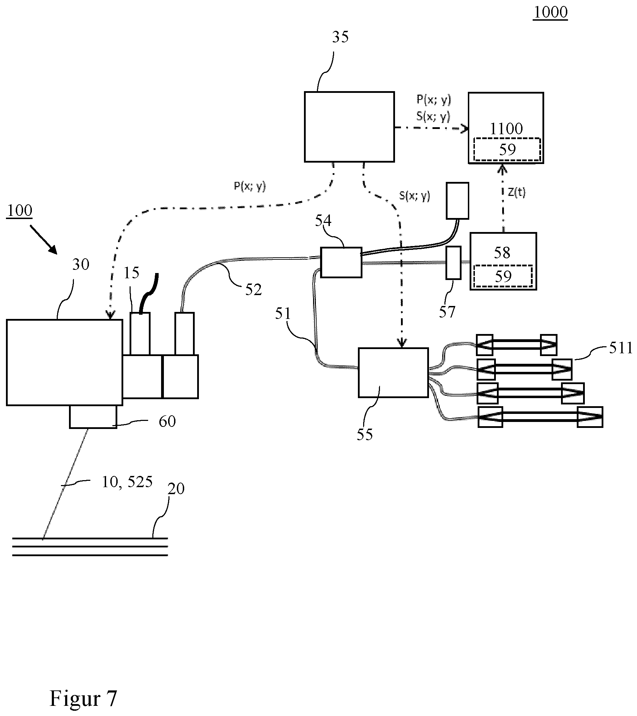

In Figur 7 ist ein Laserbearbeitungssystem 1000 mit einer OCT-Vorrichtung 50 nach einem der hierin beschriebenen Ausführungsformen gezeigt. Die OCT-Vorrichtung 50 kann insbesondere einen wie mit Bezug auf Figur 1 beschriebenen Aufbau aufweisen.

Das Laserbearbeitungssystem 1000 umfasst einen Laserbearbeitungskopf 100, der eine Scannervorrichtung 30 mit einem Scanelement (nicht gezeigt) umfasst. Die Scannervorrichtung 30 ist eingerichtet, den Laserstrahl 10 bzw. den Messlichtstrahl 525 der OCT-Vorrichtung 50 auf verschiedenen Positionen auf dem Werkstück 20 zu richten. Der Strahlengang des Messarms 52 kann in Strahlausbreitungsrichtung vor der Scannervorrichtung 30 in den Strahlengang des Laserstrahls eingekoppelt sein, z.B. mittels eines halbdurchlässigen Spiegels bzw. eines Strahlteilers. Um einen Laserstrahl in den Laserbearbeitungskopf 100 einzukoppeln, kann ein Laserport 15, beispielsweise eine Faserbuchse, vorgesehen sein. Der Laserbearbeitungskopf 100 kann ferner eine Fokussieroptik 60 umfassen, beispielsweise ein F-Theta Objektiv, um den Laserstrahl 10 bzw. den Messlichtstrahl 525 zu fokussieren. Das Laserbearbeitungssystem umfasst eine Steuervorrichtung 1100, auch Systemsteuerung genannt. Die OCT-Steuerung 58 kann in der Steuervorrichtung 1100 integriert sein oder separat vorgesehen sein. In jedem Fall ist die OCT-Steuerung 58 mit der Steuervorrichtung 1100 zum uni- oder bidirektionalen Datenaustausch verbunden. Die OCT-Steuerung 58 kann ein Messsignal bzw. Abstandswert z(t) an die Steuervorrichtung 1100 übermitteln. Des Weiteren kann eine Scannersteuerung 35 separat oder in der Steuervorrichtung 1100 integriert vorgesehen sein, die mit der Steuervorrichtung 1100 und/oder der OCT-Steuerung 58 zum uni- oder bidirektionalen Datenaustausch verbunden ist. Die Scannersteuerung 35 gibt einen Scanbefehl P(x; y) an die Scannervorrichtung 30 aus, um mittels des Scanelements den Laserstrahl 10 bzw. den Messlichtstrahl 525 auf eine gewünschte Position zu richten.

Die OCT-Steuerung 58 und/oder die Scannersteuerung 35 und/oder die Steuervorrichtung 1100 kann eingerichtet sein, entsprechend einem Scanbefehl P(x;y) zur Einstellung des Scanelements der Scannervorrichtung 30 eine der Referenzstrecken 511 zur Abstandsmessung auszuwählen und einen entsprechenden Schaltbefehl S(x;y) an das Schaltelement 55 zu übermitteln. Die Nullposition P(x=0; y=0) der Scannervorrichtung 30 kann als Nullpunkt eines Polar-Koordinatensystems definiert sein. Die Nullposition kann der minimalen optischen Weglänge bzw. dem kleinsten Wert des vorgegebenen Abstandsbereichs O entsprechen, und ist in den Figuren 4 bzw. 6 mit 0 gekennzeichnet. Der vorgegebene Abstandsbereich O, in dem die OCT-Vorrichtung zur Abstandsmessung eingerichtet ist, kann einem Scanbereich der Scannervorrichtung 30 entsprechen. Der Scanbereich der Scannervorrichtung 30 kann beispielsweise 400 mm x 335 mm oder 320 mm x 320 mm, oder 280 mm x 175 mm, oder 185 mm x 120 mm, oder 280 mm x 175 mm, oder 185 mm x 120 mm betragen. Mit anderen Worten kann der vorgegebene Abstandsbereich O einer möglichen Änderung der optischen Weglänge aufgrund einer Auslenkung durch das Scanelement entsprechen. Auf diese Weise kann bei einer Laserbearbeitung durch ein Scanner-Laserbearbeitungssystem 1000 entsprechend einer Änderung der optischen Weglänge aufgrund der Auslenkung des Messlichtstrahls 525 durch die Scannervorrichtung 35 eine geeignete Referenzstrecke 511 des Referenzarms 51 ausgewählt werden, sodass eine Abstandsmessung zu einem Objekt bzw. Bauteil an dieser Scanposition möglich ist.

Die OCT-Vorrichtung 50 und/oder das Laserbearbeitungssystem 1000 kann ferner eine Auswerteeinheit 59 umfassen, die eingerichtet ist, den Abstand basierend auf dem Scanbefehl P(x; y) bzw. basierend auf Information bezüglich der Position (x; y) im Scanbereich und basierend auf einer Überlagerung eines reflektierten Anteils des Messlichtstrahls 525 aus dem Messarm 52 und dem Referenzstrahl aus der entsprechend ausgewählten Referenzstrecke 511 des Referenzarms 51 zu bestimmen. Die Auswerteeinheit 59 kann in der OCT-Steuerung 50 und/oder in der Steuervorrichtung 1100 integriert sein.

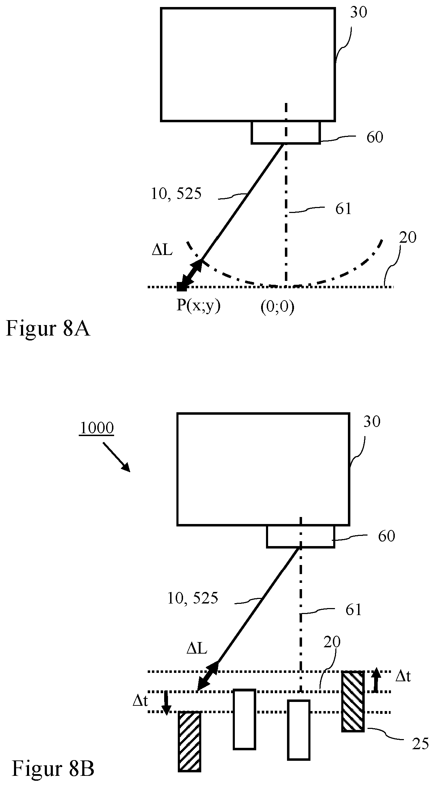

In Figuren 8A und 8B ist die Problematik der Änderung der optischen Weglänge in Abhängigkeit von der Scanposition P(x; y) veranschaulicht. Die optische Weglänge ändert sich mit der Positionsänderung des Scanelements. Beispielsweise kann die Oberfläche des Werkstücks 20 als plan angenommen werden und definiert die Arbeitsebene für den Laserbearbeitungsprozess. Eine Auslenkung des Messlichtstrahls 525 auf eine Position (x; y) führt zu einer Längenänderung von ΔL bezüglich der Nullposition (0; 0). Für einen Scanbereich bzw. für ein Scanfeld von 400 mm x 300 mm kann die optische Weglängenänderung bezüglich der Nullposition beispielsweise 31 mm betragen. Bei einer Bauteiltoleranz bzw. mechanischen Toleranz von +/- 10 mm ergibt sich ein abzudeckender Messbereich von 51 mm. Der maximale Wert des Abstandsmessbereichs O sollte daher zumindest 51 mm betragen. Die optische Achse 61 der Fokussieroptik 60 ist ebenfalls angedeutet und fällt mit dem Strahlverlauf an der Nullposition zusammen.

Die OCT-Vorrichtung 50 kann einen Referenzstreckenaufbau gemäß Figuren 3 oder 5 und/oder einen Referenzarmaufbau gemäß Figur 4 oder 6 aufweisen. Um sicherzustellen, dass im gesamten vorgegebenen Abstandsbereich O ein Abstand zu einem auf bzw. an der Werkstückoberfläche angeordneten Bauteil 25 gemessen werden kann, kann der Referenzstreckenaufbau aus Figur 5 verwendet werden, wobei der negative aktive Messbereich nMB an einen unteren und/oder oberen negativen Toleranzbereich n TB1, nTB2 angrenzt und der positive aktive Messbereich pMB an einen unteren und/oder oberen positiven Toleranzbereich pTB1, pTB2 angrenzt. Auf diese Weise kann sichergestellt werden, dass bei einer entsprechend der Scanposition gewählten Schaltposition bzw. bei einer entsprechend der Scanposition gewählten Referenzstrecke eine Bauteilhöhenmessung (zumindest im Bereich der Bauteiltoleranz Δt) möglich ist. Durch die Reduktion des aktiven Messbereichs um den Toleranzbereich, kann die Eindeutigkeit der Messung der Bauteilhöhe im gesamten Scanbereich gewährleistet werden. Mit anderen Worten kann der aktive Messbereich aMB (d.h. nMB, pMB) genutzt werden, um die Scanpositions-abhängige Weglängenänderung bzw. Abstandsänderung auszugleichen, um anschließend die Bauteilhöhe innerhalb der vorgegebenen Toleranzgrenzen +/- Δt an der Scanposition zu bestimmen.

Im Folgenden wird beispielhaft erläutert, wie die OCT-Vorrichtung 50 bzw. der Referenzarm 51 der OCT-Vorrichtung gemäß einer Ausführungsform der vorliegenden Erfindung aufgebaut werden kann. Zunächst wird ein Zusammenhang zwischen der Auslenkung bzw. Positionsänderung des Scanelements (z.B. ein Scanner-Spiegel) und der Änderung der optischen Weglänge (OWL) bzw. des Abstands zu einer Arbeits-/Referenzebene oder (beispielsweise planen) Werkstückoberfläche 20 festgestellt - entweder experimentell bei einer Kalibration oder durch eine Simulation (vgl. Figuren 8A und 8B). Die sich ergebende Scanpositionsabhängige optische Weglängenänderung muss im Anschluss auf die aktiven Messbereiche des Referenzarms 51 der OCT-Vorrichtung aufgeteilt werden. Die genauen Abstände zwischen den einzelnen Referenzstrecken 511 ergeben sich aus vorgegebenen Bauteiltoleranzen Δt, um die eine Höhenposition eines Bauteils abweichen kann, sowie aus minimalen und maximalen messbaren Werten der OCT-Vorrichtung 50, d.h. aus dem durch die OCT-Vorrichtung messbaren Abstandsbereich O. Die Referenzstrecken 511 werden nun so justiert, dass sich die ergebenden aktiven Messbereiche nMB, pMB ergänzen. Somit decken die aktiven Messbereiche nMB, pMB der Referenzstrecken den vorgegebenen Abstandsbereich O bzw. die optische Weglängenänderung im gesamten Scanbereich ab. Jeder Referenzstrecke wird eine Position des Schaltelements 55 zugeteilt, sodass in Abhängigkeit der Scanposition bzw. des Scanbefehls zu der einen oder anderen Referenzstrecke geschaltet werden kann.

Im Folgenden wird ein Beispiel für eine solche sogenannte Justage detaillierter beschrieben: Zunächst werden die Referenzstrecken also so eingestellt, dass ein Signal im negativen Messbereich nMB bei mindestens einer der Referenzstrecken 511 (oder auch allen) in der Arbeitsebene im Scanbereich messbar ist. Die Einstellung der tatsächlichen Referenzstrecken erfolgt beispielsweise iterativ mit Hilfe eines Umschalt-Moduls, z.B. des Schaltelements 55, und der mechanischen Positionsanpassung von Endspiegeln der jeweiligen Referenzstrecken 511 im Referenzarm 51. Einfachheitshalber können die Indizes der Referenzstrecken den Positionen des Schaltelements entsprechen. Für die Referenzstrecken selbst soll gelten: Die Länge der i-ten Referenzstrecke ist kleiner als die Länge der (i+1)-ten Referenzstrecke, d.h. RS_i<RS_i+1. Mit anderen Worten entspricht der Messbereich MB der i-ten Referenzstrecke kleineren Abstandswerten als der Messbereich MB der (i+1)-ten Referenzstrecke.

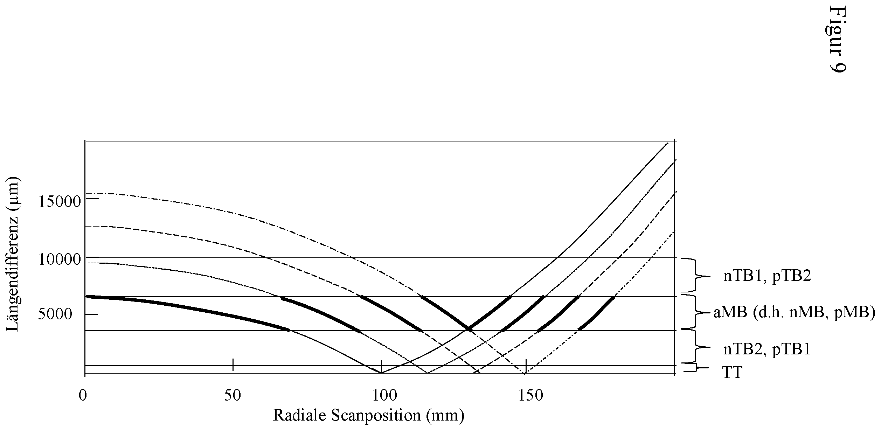

Anschließend wird die erste Referenzstrecke auf die Position mit der kürzesten optischen Weglänge OWL(x;y) bzw. mit dem kürzesten Abstand so eingestellt, dass das Messignal im negativen aktiven Messbereich nMB liegt, insbesondere an einem äußeren Rand davon (vgl. Figuren 4, 6 und 9). In Figur 9 ist eine Berechnung für einen möglichen Verlauf einer Abstandsmessung für eine Scanposition von 0 bis 200 mm dargestellt, z.B. wird die Radialkoordinate r von 0 mm bis 200 mm geändert. Die vier Kurven stellen vier Referenzstrecken dar und entsprechen einer OWL-Änderung bei Vermessung einer idealisierten planen Oberfläche, die parallel zur Scanner-Ebene angeordnet ist. Die aktiven Messbereiche auf jeder Kurve sind hervorgehoben. Darüber hinaus wird die Annahme getroffen, dass das optische Scannersystem radialsymmetrisch ist. Das heißt, bei Scanposition (x=0; y=0), d.h. bei der Nullposition, steht der Messlichtstrahl senkrecht auf dieser Oberfläche (d.h. Neigung ist Null). Die Kurven haben vertikale Offsets 1_o jeweils von 6500, 9500, 12500 und 15500 µm (bei idealisiertem quadratischem Verlauf und Krümmung k≈0,7). Aufgrund der verschiedenen vertikalen Offsets 1_o sind die Verläufe der Kurven verschoben und kommen bei jeweils anderer Scanposition in den (positiven bzw. negativen) aktiven Messbereich nMB, pMB (d.h. in den "verfügbaren Messbereich"). In dem Verlauf der jeweiligen Kurve sind auch der negative und der positive aktive Messbereich erkennbar, die links und rechts von dem Umkehrpunkt bei "Längendifferenz=0" liegen. Links von dem Umkehrpunkt, d.h. im negativen aktiven Messbereich nMB, ist die Referenzstrecke 511 länger als der Messabstand, rechts davon, d.h. im positiven aktiven Messbereich pMB, ist sie kürzer. Angrenzend zum Bereich "Längendifferenz=0" ist der Totbereich TT angedeutet. Der obere Längendifferenz-Bereich ist nur schematisch dargestellt und liegt außerhalb des Messbereichs der Referenzstrecken. Wie aus Figur 9 ersichtlich ist, sind die Referenzstrecken so eingestellt, dass wenn bei Veränderung der Scanposition die Messsignalkurve einer Referenzstrecke den aktiven Messbereich dieser Referenzstrecke verlässt, die Messsignalkurve einer benachbarten Referenzstrecke in den aktiven Messbereich dieser benachbarten Referenzstrecke gerät. Die Oberfläche liegt so im gesamten Scanbereich von 0 mm bis 200 mm immer in einem aktiven Messbereich einer der Referenzstrecken.

Wie oben erläutert, entspricht die optische Weglänge OWL(x;y) einer Messstrecke, die von der Scanposition (x;y) abhängt. Je nach Konfiguration und Position (x;y) kann die Referenzstrecke länger oder kürzer sein als die Messstrecke. Ist sie länger, so kann die Referenzstrecke so eingestellt werden, dass das Signal am größeren bzw. oberen Rand des aktiven Messbereichs für die erste bzw. kürzeste Referenzstrecke bei Scanposition 0, für die zweite Referenzstrecke bei Scanposition ca. 60 mm, etc. eingestellt wird (vgl. Figur 9). Ist die Referenzstrecke kürzer als die Messstrecke, so kann der kleinere bzw. untere Rand des aktiven Messbereichs als Start-Position gewählt. In Figur 9 sieht man, dass es bei idealer Ausrichtung bzw. Anordnung immer einen Bereich gibt, in welchem Signale von zwei (oder mehr) Referenzstrecken detektierbar sind. Ist der äußere Rand des aktiven Messbereichs nMB, pMB bei einer Referenzstrecke erreicht, so schaltet man zur nächsten sinnvollen Referenzstrecke um und justiert diese, bis deren Peak am entsprechenden Rand des aktiven Messbereichs zu erkennen ist. Weitere Arten der Justage sind denkbar.

Je nach Vorgaben, insbesondere von Bauteiltoleranz und/oder Scanbereich, und Konstellation bzw. Aufbau des Laserbearbeitungssystems, insbesondere OCT-Detektor, Scannervorrichtung und Optiken, wird die Länge der einzelnen Referenzstrecken bestimmt. Die Definition der Längen von den Referenzstrecken kann auch aus einer Simulation des Systems hervorgehen, somit könnte man die Referenzstrecken mit gegebenen Längen aufbauen und am System lediglich eine Feinjustage vornehmen. Jede der Referenzstrecken kann dann durch Kombination aus definierten Faserlängen und/oder einem justierbaren Freistrahlaufbau umgesetzt werden.

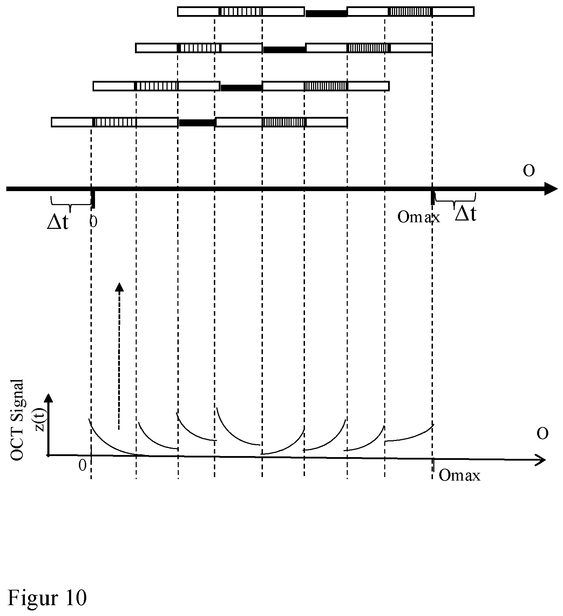

Durch opto-mechanischen Eigenschaften des Scanner-Systems kann die Auslenkung des Scanelements (z.B. der Scanner-Spiegel) eine Veränderung der optischen Weglänge zur Zielebene bewirken, wodurch eine Kalibration des OCT-Signals bzw. des Abstandswerts in Abhängigkeit der Auslenkung bzw. der Scanposition notwendig wird. Das ist auch beispielsweise aus dem unteren Teil von Figur 10 ersichtlich: Es können komplexe Offsets mit diversen Abhängigkeiten auftreten, insbesondere von der Länge der einzelnen Referenzstrecken, von der Scanposition, von einer Neigung des Laserbearbeitungssystems bzgl. der Arbeitsebene bzw. Werkstückoberfläche, von eingesetzten optischen Elementen (z.B. Spiegel, Linsen), etc.

Nachdem die Referenzstrecken eingestellt sind bzw. die Justage abgeschlossen ist, kann daher eine Referenzebene (z.B. eine Kalibrierplatte) im gesamten Scanbereich gescannt werden und OCT-Messsignale können bei jeweiliger Schalterstellung des Schaltelements in Abhängigkeit der Scanposition P(x; y) aufgenommen werden. Die Messsignale können mit Polynomen mindestens zweiten Grades gefittet werden (z.B. nach RANSAC Algorithmus). Ferner können die relevanten Parameter (z.B. für Krümmung, Neigung und Offsets) festgelegt werden. Mit diesen Parametern kann ein Modell erstellt werden, welches die OWL-Änderung in Abhängigkeit von x und y Positionen abbildet. Die Parameter sind von unterschiedlichen physikalischen Größen abhängig:
- Die berechneten Offsets der Funktionen für die jeweilige Schalterstellung hängen zusammen mit den Längen der Referenzstrecken.
- Die Krümmung der Funktion wird vor allem durch Eigenschaften der Scannervorrichtung bestimmt, wie z.B. einer Anordnung der Scanelemente (z.B. eine Scanner-Spiegel-Anordnung und Scanner-Spiegel-Abstände), eine Arbeitsdistanz, und/oder Eigenschaften der optischen Elemente.
- Die Neigung der Scannervorrichtung zur Werkstückauflage bzw. zur Werkstückoberfläche bestimmt die Neigung der Funktion.

Dieses Modell liefert anschließend die Informationen für eine Einstellung des Schaltelements bzw. welche Schalterstellung an einer gegebenen Scanposition P(x;y) eingesetzt wird. Dadurch wird eine korrekte Distanzvermessung an jeder Scanposition P(x;y) im Scanbereich bzw. Scanfeld ermöglicht, was ausschlaggebend für die Anpassung der Prozessparameter sein kann. Aus den Eigenschaften dieses mathematischen Modells für die optische Weglänge in Abhängigkeit der Scanposition OWL(x;y) können folgende Eigenschaften des Systems extrahiert werden:
- Definition der Offsets der Messsignale aus der Referenzebene an der jeweiligen Scanposition P(x;y);
- Zuordnung von Schalterposition bzw. -stellung zu den Koordinaten des Scanbereichs;
- Neigung zwischen Werkstück bzw. Werkstückauflage zur Arbeitsebene des Scanner-Laserbearbeitungssystems;
- Offset-Position der einzelnen Referenzstrecken;
- Globaler Offset des kompletten Systems (also aller Referenzstrecken als Gemeinschaft, in Bezug auf die Messebene).

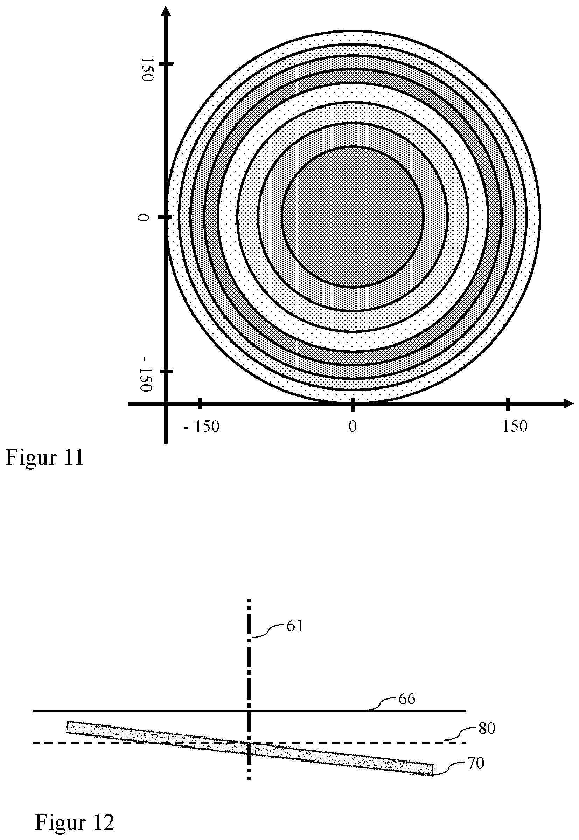

In Figur 11 ist die beispielhafte Aufteilung eines Scanbereichs von ca. 360 mm Durchmesser auf Schalterstellungen des Schaltelements gezeigt. Jeder Ring entspricht hierbei einer Schalterstellung bzw. einer Referenzstrecke 511 des Referenzarms 51. Die Breite der Ringe ist definiert durch die Zuordnung der aktiven Messbereiche aMB (d.h. nMB, pMB) analog zu der Fig. 9 (hervorgehobene Kurventeile von Figur 9 entsprechen den Flächen in Figur 11).

In Figur 12 ist eine Situation für eine bzgl. des Laserbearbeitungssystems geneigte Kalibrierplatte 70 bzw. Werkstückauflage gezeigt. Die optische Achse 61 der Fokussieroptik 60 bzw. der unausgelenkte Messlichtstrahl oder Laserstrahl ist ebenfalls gezeigt. Im Falle einer F-Theta Optik als Fokussieroptik 60 liegt der Fokus in einer planen Fokusebene 66. In dieser Situation einer Neigung zwischen Werkstück bzw. Werkstückauflage und Laserbearbeitungssystem kann eine virtuelle Arbeitsebene 80 definiert werden, die senkrecht zur optischen Achse 61 und/oder parallel zur Fokusebene 66 sowie durch einen Schnittpunkt der optischen Achse 61 mit der Kalibrierplatte 70 bzw. Werkstückauflage verläuft. Bei der Kalibration kann wie oben beschrieben ein Neigungswinkel der Werkstückauflage bzw. der Kalibrierplatte 70 bzgl. der virtuellen Arbeitsebene 80 bestimmt werden.

Die aus der Kalibration erhaltenen Parameter ermöglichen also die Bestimmung einer Neigung zwischen der Werkstückauflage zu der Arbeitsebene 80 des Scanner-Laserbearbeitungssystems. Mit dieser Information kann ein Hinweis an den Nutzer erfolgen, ob Toleranzen überschritten sind, oder wie diese relative Neigung ausgeprägt ist, sodass der Nutzer ggf. Korrekturmaßnahmen ergreifen kann. Des Weiteren kann eine virtuelle Arbeitsebene bestimmt werden, welche parallel und idealerweise identisch zu der Fokusebene des Laserbearbeitungssystems liegt. Der Unterschied zu der Werkstückauflage kann bei der Messung berücksichtigt werden, sodass der tatsächliche Abstand von dem vermessenen Punkt der Oberfläche zum Laserbearbeitungssystem bestimmt wird. Diese Information kann dann bei Einstellungen der Systemparameter angewendet werden - insbesondere bei der Einstellung des Kollimators des Laserstrahls zur Einstellung der Fokuslage, und/oder bei der Einstellung der Fokussiereinstellung einer integrierten Kamera, und/oder bei Korrektur der Höhe der Arbeitsebene.

Gemäß der vorliegenden Erfindung wird ermöglicht, den Abstandsbereich, in welchem eine OCT-Messung möglich ist, zu erweitern, indem durch geschickte Anordnung der Referenzstrecken der negative Messbereich einer Referenzstrecke neben dem positiven Messbereich dieser Referenzstrecke nutzbar gemacht wird. Durch das Umschalten zu einer ergänzenden Referenzstrecke kann der Bereich um den Wert 0 ("Totbereich") herum überbrückt werden. Somit wird eine sichere Messung gewährleistet, ohne dass die fehlerbehafteten Messbereich-Grenzen erreicht werden. Die Referenzstrecken werden so eingestellt, dass sie sich ergänzen, um mit einer möglichst geringen Anzahl von Referenzstrecken eine möglichst große optische Weglängenänderung ausgleichen bzw. einen möglichst großen Abstandsbereich O abdecken zu können.

### Bezugszeichenliste:

- 50: Optische Kohärenztomografie-Vorrichtung
- 51: Referenzarm
- 511: Referenzstrecke
- 52: Messarm
- 525: Messlichtstrahl
- 53: Messlichtquelle
- 54: optisches Element
- 55: Schaltelement
- 57: Detektor
- 58: OCT-Prozessor bzw. Steuerung
- 59: Auswertevorrichtung
- O: Abstandsbereich
- MB: Messbereich
- TT: Totbereich
- nMB: Negativer aktiver Messbereich
- pMB: Positiver aktiver Messbereich
- aMB: Aktiver Messbereich
- nTB: Negativer Toleranzbereich
- nTB1: Unterer negativer Toleranzbereich
- nTB2: Oberer negativer Toleranzbereich
- pTB: Positiver Toleranzbereich
- pTB1: Unterer positiver Toleranzbereich
- pTB2: Oberer positiver Toleranzbereich
- 1000: Laserbearbeitungssystem
- 1100: Systemsteuerung bzw. Steuervorrichtung
- 100: Laserbearbeitungskopf
- 10: Laserstrahl
- 15: Laserport
- 20: Werkstück
- 25: Bauteil
- 30: Scannervorrichtung
- 35: Scannersteuerung
- 60: Fokussieroptik
- 61: optische Achse der Fokussieroptik
- 66: Fokusebene
- 80: Virtuelle Ebene

## Patentansprüche

1. Optische Kohärenztomografie-Vorrichtung (50) für ein Laserbearbeitungssystem (1000) zur Abstandsmessung zu einem Objekt (20, 25) in einem vorgegebenen Abstandsbereich (O), umfassend:
eine Messlichtquelle (53) zum Erzeugen von Messlicht;
ein optisches Element (54) zum Aufteilen des Messlichts in den Messlichtstrahl (525) und einen Referenzstrahl;
einen Messarm (52) zum Richten des Messlichtstrahls (525) auf das Objekt (20, 25);
einen Referenzarm (51) zum Führen des Referenzstrahls mit einer Vielzahl von Referenzstrecken (511), die jeweils einen Messbereich (MB) aufweisen;
ein steuerbares Schaltelement (55) zum Schalten zwischen den Referenzstrecken (511) des Referenzarms (51); und
einen Detektor (57) zum Erfassen eines Interferenzsignals zwischen dem Messarm (52) und dem Referenzarm (51);
wobei der Messbereich (MB) von jeder Referenzstrecke (511) einen negativen aktiven Messbereich (nMB) und einen positiven aktiven Messbereich (pMB) umfasst, zwischen denen einen Totbereich (TT) liegt;
wobei der Totbereich (TT) von einer der Referenzstrecken (511) von einem negativen oder positiven aktiven Messbereich (nMB, pMB) von zumindest einer anderen Referenzstrecke (511) überlappt ist;
wobei die positiven und negativen aktiven Messbereiche (nMB, pMB) der Referenzstrecken (511) zusammen den vorgegebenen Abstandsbereich (O) abdecken; und
wobei das steuerbare Schaltelement (55) eingerichtet ist und so mit den Referenzstrecken verbunden ist, um zwischen dem positiven aktiven Messbereich (pMB) einer der Referenzstrecken (511) und dem negativen aktiven Messbereich (nMB) einer anderen der Referenzstrecken (511) hin und her zu schalten bzw. umzuschalten..

2. Optische Kohärenztomografie-Vorrichtung nach Anspruch 1, wobei der Referenzarm N Referenzstrecken umfasst, und:
ein negativer aktiver Messbereich einer n-ten Referenzstrecke kleineren Abstandswerten entspricht als ein negativer aktiver Messbereich einer (n+1)-ten Referenzstrecke, wobei N eine natürliche Zahl größer 1 ist und n eine natürliche Zahl mit 1 ≤ n ≤ N ist; und/oder
ein positiver aktiver Messbereich einer n-ten Referenzstrecke kleineren Abstandswerten entspricht als ein positiver aktiver Messbereich einer (n+1)-ten Referenzstrecke, wobei N eine natürliche Zahl größer 1 ist und n eine natürliche Zahl mit 1 ≤ n ≤ N ist.

3. Optische Kohärenztomografie-Vorrichtung nach Anspruch 1 oder 2, wobei der Referenzarm N Referenzstrecken umfasst, und die Referenzstrecken zumindest eine j-te Referenzstrecke umfassen, deren negativer aktiver Messbereich unmittelbar an einen positiven aktiven Messbereich einer i-ten Referenzstrecke angrenzt, wobei i, j natürliche Zahlen mit 1 ≤ i < j ≤ N sind.

4. Optische Kohärenztomografie-Vorrichtung nach einem der vorhergehenden Ansprüche,
wobei der Referenzarm eine Gruppe von M Referenzstecken umfasst, wobei M eine natürliche Zahl mit 1 ≤ M ≤ N ist; und
wobei für jede Gruppe gilt:
zwischen einem negativen aktiven Messbereich und einem positiven aktiven Messbereich einer m-ten Referenzstrecke die negativen Messbereiche von (M-m) anderen Referenzstrecken und/oder die positiven Messbereiche von (m-1) anderen Referenzstrecken angeordnet sind, wobei m eine natürliche Zahl mit 1 ≤ m ≤ M ist.

5. Optische Kohärenztomografie-Vorrichtung nach Anspruch 4, wobei der Referenzarm K Gruppen von Referenzstecken umfasst, die dieselbe Anzahl M von Referenzstrecken oder unterschiedliche Anzahlen Mₖ von Referenzstrecken umfassen; und
wobei ein Messbereich einer (k+1)-ten Gruppe größeren Abstandswerten entspricht als ein Messbereich einer k-ten Gruppe, wobei K eine natürliche Zahl mit 1 < K und k eine natürliche Zahl mit 1 ≤ k ≤ K ist.

6. Optische Kohärenztomografie-Vorrichtung nach einem der vorausgehenden Ansprüche, wobei der Messbereich (MB) von jeder Referenzstrecke (511) ferner umfasst:
einen positiven Toleranzbereich (pTB), der an einer oder an beiden Seiten des positiven aktiven Messbereichs (pMB) dieser Referenzstrecke angrenzt; und/oder
einen negativen Toleranzbereich (nTB), der an einer oder an beiden Seiten des negativen aktiven Messbereichs (nMB) dieser Referenzstrecke angrenzt.

7. Optische Kohärenztomografie-Vorrichtung nach Anspruch 6, wobei der negative oder positive Toleranzbereich (nTB, pTB) einer Referenzstrecke mit einem negativen oder positiven aktiven Messbereich (nMB, pMB) zumindest einer anderen Referenzstrecke überlappt.

8. Optische Kohärenztomografie-Vorrichtung nach einem der vorausgehenden Ansprüche, ferner umfassend:
eine Steuerung (58) zum Steuern des Schaltelements (55) der optischen Kohärenztomografie-Vorrichtung;
wobei die Steuerung (58) eingerichtet ist, eine Referenzstrecke (511) mit einem positiven aktiven oder negativen aktiven Messbereich (nMB, pMB) entsprechend einem vorgegebenen Teilbereich des Abstandsbereichs (O) auszuwählen und mittels des Schaltelements (55) in die ausgewählte Referenzstrecke (511) zu schalten.

9. Optische Kohärenztomografie-Vorrichtung nach Anspruch 8, wobei die Steuerung (58) eingerichtet ist, für eine Abstandsmessung in einem Teilbereich des vorgegebenen Abstandsbereichs (O) mit größeren Abständen mittels des Schaltelements (55) in eine kürzere Referenzstrecke (511) zu schalten.

10. Laserbearbeitungssystem (1000), umfassend:
einen Laserbearbeitungskopf (100) zum Einstrahlen eines Laserstrahls (10) auf ein Werkstück (20);
eine optische Kohärenztomografie-Vorrichtung (50) nach einem der vorausgehenden Ansprüche; und
eine Steuervorrichtung (1100) zum Steuern des Laserbearbeitungssystems.

11. Laserbearbeitungssystem nach Anspruch 10, wobei der Laserbearbeitungskopf (100) eine Scannervorrichtung (30) mit zumindest einem Scanelement zum Auslenken des Laserstrahls (10) auf eine Vielzahl von Positionen auf dem Werkstück (20) umfasst, und
wobei die Steuervorrichtung (1100) eingerichtet ist, entsprechend einem Scanbefehl zur Einstellung des Scanelements der Scannervorrichtung (30) eine der Referenzstrecken (511) zur Abstandsmessung auszuwählen.

12. Laserbearbeitungssystem nach Anspruch 11, ferner umfassend:
eine Auswertevorrichtung (59), die eingerichtet ist, den Abstand basierend auf dem Scanbefehl und basierend auf einer Überlagerung von einem vom Objekt reflektierten Anteil des Messlichtstrahls (525) aus dem Messarm (52) und dem Referenzstrahl aus dem Referenzarm (51) zu bestimmen.

13. Laserbearbeitungssystem nach Anspruch 10, 11 oder 12, wobei die Steuervorrichtung (1100) eingerichtet ist, basierend auf Abstandswerten, die während eines Scannens des Messlichtstrahls (525) über das Werkstück (20) mittels der Scannervorrichtung (30) von der optischen Kohärenztomografie-Vorrichtung (50) ermittelt worden sind, eine Ausrichtung und/oder Neigung des Laserbearbeitungskopfs (100) bezüglich einer Arbeitsebene und/oder des Werkstücks (20) zu bestimmen.

14. Laserbearbeitungssystem nach Anspruch 10, 11, 12 oder 13, wobei die Steuervorrichtung eingerichtet ist, Referenz-Höhenwerte zu entsprechenden Positionen in einem Scanbereich der Scannervorrichtung (30) zuzuordnen und den Abstand zum Werkstück an einer vorgegebener Scannerposition basierend auf dieser Zuordnung und einer Messung an dieser Scannerposition zu bestimmen.

15. Laserbearbeitungssystem nach Anspruch 10, 11, 12, 13 oder 14, wobei die Steuervorrichtung eingerichtet ist, Systemparameter und/oder Bearbeitungsparameter basierend auf dem bestimmten Abstand anzupassen.

## Claims

1. An optical coherence tomography device (50) for a laser machining system (1000) for measuring the distance to an object (20, 25) in a predetermined distance range (O), comprising:
a measuring light source (53) for generating measuring light;
an optical element (54) for splitting the measuring light into the measuring light beam (525) and a reference beam;
a measuring arm (52) for directing the measuring light beam (525) onto said object (20, 25);
a reference arm (51) for guiding the reference beam with a plurality of reference sections (511), each of which has a measuring range (MB);
a controllable switching element (55) for switching between the reference sections (511) of said reference arm (51); and
a detector (57) for detecting an interference signal between said measuring arm (52) and said reference arm (51);
wherein the measuring range (MB) of each reference section (511) comprises a negative active measuring range (nMB) and a positive active measuring range (pMB), between which a dead zone (TT) is located;
wherein the dead zone (TT) of one of the reference sections (511) is overlapped by a negative or positive active measuring range (nMB, pMB) of at least one other reference section (511);
wherein the positive and negative active measuring ranges (nMB, pMB) of the reference sections (511) together cover the predetermined distance range (O); and
wherein the controllable switching element (55) is configured and connected to the reference sections so as to switch back and forth or change between the positive active measuring range (pMB) of one of the reference sections (511) and the negative active measuring range (nMB) of another of the reference sections (511).

2. The optical coherence tomography device according to claim 1, wherein said reference arm comprises N reference sections, and:
a negative active measuring range of an nth reference section corresponds to smaller distance values than a negative active measuring range of an (n+1)th reference section, where N is a natural number greater than 1 and n is a natural number with 1 ≤ n ≤ N; and/or
a positive active measuring range of an nth reference section corresponds to smaller distance values than a positive active measuring range of an (n+1)th reference section, where N is a natural number greater than 1 and n is a natural number with 1 ≤ n ≤ N.

3. The optical coherence tomography device according to claim 1 or 2, wherein said reference arm comprises N reference sections, and the reference sections comprise at least one jth reference section the negative active measuring range of which is directly adjacent to a positive active measuring range of an ith reference section, where i, j are natural numbers with 1 ≤ i < j ≤ N.

4. The optical coherence tomography device according to one of the preceding claims,
wherein said reference arm comprises a group of M reference sections, where M is a natural number with 1 ≤ M ≤ N; and
wherein the following applies to each group:
the negative measuring ranges of (M-m) other reference sections and/or the positive measuring ranges of (m-1) other reference sections are arranged between a negative active measuring range and a positive active measuring range of an m-th reference section, where m is a natural number with 1 ≤ m ≤ M.

5. The optical coherence tomography device according to claim 4, wherein said reference arm comprises K groups of reference sections which comprise the same number M of reference sections or different numbers Mk of reference sections; and
wherein a measuring range of a (k+1)-th group corresponds to larger distance values than a measuring range of a k-th group, where K is a natural number with 1 < K and k is a natural number with 1 ≤ k ≤ K.

6. The optical coherence tomography device according to one of the preceding claims, wherein the measuring range (MB) of each reference section (511) further comprises:
a positive tolerance range (pTB) which borders on one or both sides of the positive active measurement range (pMB) of said reference section; and/or
a negative tolerance range (nTB) which borders on one or both sides of the negative active measurement range (nMB) of said reference section.

7. The optical coherence tomography device according to claim 6, wherein the negative or positive tolerance range (nTB, pTB) of a reference section overlaps with a negative or positive active measurement range (nMB, pMB) of at least one other reference section.

8. The optical coherence tomography device according to one of the preceding claims, further comprising:
a control (58) for controlling said switching element (55) of said optical coherence tomography device;
wherein said control (58) is configured to select a reference section (511) with a positive active or negative active measurement range (nMB, pMB) according to a predetermined sub-range of the distance range (O) and to switch to the selected reference section (511) by means of the switching element (55).

9. The optical coherence tomography device according to claim 8, wherein said control (58) is configured to switch to a shorter reference section (511) for a distance measurement in a sub-range of the predetermined distance range (O) with larger distances by means of said switching element (55).

10. A laser machining system (1000), comprising:
a laser machining head (100) for radiating a laser beam (10) onto a workpiece (20);
an optical coherence tomography device (50) according to one of the preceding claims; and
a control device (1100) for controlling said laser machining system.

11. The laser machining system according to claim 10, wherein said laser machining head (100) comprises a scanner device (30) with at least one scanning element for deflecting the laser beam (10) to a plurality of positions on said workpiece (20), and
wherein said control device (1100) is configured to select one of the reference sections (511) for distance measurement in accordance with a scan command for adjusting said scanning element of said scanner device (30).

12. The laser machining system according to claim 11, further comprising:
an evaluation device (59) configured to determine the distance based on the scan command and based on a superposition of a portion of the measuring light beam (525) from said measuring arm (52) reflected by said object and the reference beam from said reference arm (51).

13. The laser machining system according to claim 10, 11 or 12, wherein said control device (1100) is configured to determine an alignment and/or inclination of said laser machining head (100) with respect to a working plane and/or said workpiece (20) based on distance values that were determined by said optical coherence tomography device (50) during a scanning of the measuring light beam (525) over said workpiece (20) by means of said scanner device (30).

14. The laser machining system according to claim 10, 11, 12 or 13, wherein said control device is configured to assign reference height values to corresponding positions in a scan area of said scanner device (30) and to determine the distance to said workpiece at a predetermined scanner position based on this assignment and a measurement at said scanner position.

15. The laser machining system according to claim 10, 11, 12, 13 or 14, wherein said control device is configured to adjust system parameters and/or machining parameters based on the determined distance.

## Revendications

1. Dispositif de tomographie par cohérence optique (50) pour un système d'usinage au laser (1000), destiné à mesurer une distance jusqu'à un objet (20, 25) dans un intervalle de distance (O) prédéterminé, comprenant :
une source lumineuse de mesure (53) pour générer une lumière de mesure ;
un élément optique (54) pour diviser la lumière de mesure en faisceau lumineux de mesure (525) et un faisceau de référence ;
un bras de mesure (52) pour diriger le faisceau lumineux de mesure (525) sur l'objet (20, 25) ;
un bras de référence (51) pour guider le faisceau de référence avec une pluralité de sections de référence (511) qui ont chacune un intervalle de mesure (MB) ;
un élément de commutation pouvant être commandé (55) pour basculer entre les lignes de référence (511) du bras de référence (51) ; et
un détecteur (57) pour détecter un signal d'interférence entre le bras de mesure (52) et le bras de référence (51) ;
dans lequel l'intervalle de mesure (MB) de chaque section de référence (511) comprend un intervalle de mesure actif négatif (nMB) et un intervalle de mesure actif positif (pMB) entre lesquels se situe une zone morte (TT) ;
dans lequel la zone morte (TT) d'une des sections de référence (511) est chevauchée par un intervalle de mesure actif négatif ou positif (nMB, pMB) d'au moins une autre section de référence (511) ;
dans lequel les intervalles de mesure actifs positifs et négatifs (pMB, nMB) des sections de référence (511) couvrent ensemble l'intervalle de distance (O) spécifié ; et
dans lequel l'élément de commutation pouvant être commandé (55) est configuré et ainsi relié aux sections de référence afin de commuter en va-et-vient ou de basculer entre l'intervalle de mesure actif positif (pMB) d'une des sections de référence (511) et l'intervalle de mesure actif négatif (nMB) d'une autre des sections de référence (511).

2. Dispositif de tomographie par cohérence optique selon la revendication 1, dans lequel le bras de référence comprend N sections de référence, et :
un intervalle de mesure actif négatif d'une n^{ème} section de référence correspond à des valeurs de distance plus petites qu'un intervalle de mesure actif négatif d'une (n+1)^{ème} section de référence, dans lequel N est un entier naturel supérieur à 1 et n est un entier naturel avec 1 ≤ n ≤ N ; et/ou
un intervalle de mesure actif positif d'une n^{ème} section de référence correspond à des valeurs de distance plus petites qu'un intervalle de mesure actif positif d'une (n+1)^{ème} section de référence, dans lequel N est un entier naturel supérieur à 1 et n est un entier naturel avec 1 ≤ n ≤ N.

3. Dispositif de tomographie par cohérence optique selon la revendication 1 ou 2, dans lequel le bras de référence comprend N sections de référence et les sections de référence comprennent au moins une j^{ème} section de référence dont l'intervalle de mesure actif négatif jouxte directement un intervalle de mesure actif positif d'une i^{ème} section de référence, dans lequel i, j sont des entiers naturels avec 1 ≤ i < j ≤ N.

4. Dispositif de tomographie par cohérence optique selon l'une des revendications précédentes,
dans lequel le bras de référence comprend un groupe de M sections de référence, dans lequel M est un entier naturel avec 1 ≤ M ≤ N ; et
dans lequel, pour chaque groupe :
les intervalles de mesure négatifs de (M-m) autres sections de référence et/ou les intervalles de mesure positifs de (m-1) autres sections de référence sont situés entre un intervalle de mesure actif négatif et un intervalle de mesure actif positif d'une m^{ème} section de référence, dans lequel m est un entier naturel avec 1 ≤ m ≤ M.

5. Dispositif de tomographie par cohérence optique selon la revendication 4, dans lequel le bras de référence comprend K groupes de sections de référence qui comprennent le même entier naturel M de sections de référence ou Mₖ différents entier naturels de sections de référence ; et
dans lequel un intervalle de mesure d'un (k+1)^{ème} groupe correspond à des valeurs de distance plus grandes qu'un intervalle de mesure d'un k^{ème} groupe, dans lequel K est un entier naturel avec 1 < K et k est un entier naturel avec 1 ≤ k ≤ K.

6. Dispositif de tomographie par cohérence optique selon l'une des revendications précédentes,
dans lequel l'intervalle de mesure (MB) de chaque section de référence (511) comprend en outre :
un intervalle de tolérance positif (pTB) qui jouxte un côté ou les deux côtés de l'intervalle de mesure actif positif (pMB) de cette section de référence ; et/ou
un intervalle de tolérance négatif (nTB) qui jouxte un côté ou les deux côtés de l'intervalle de mesure actif négatif (nMB) de cette section de référence.

7. Dispositif de tomographie par cohérence optique selon la revendication 6, dans lequel l'intervalle de tolérance négatif ou positif (nTB, pTB) d'une section de référence chevauche un intervalle de mesure actif négatif ou positif (nMB, pMB) d'au moins une autre section de référence.

8. Dispositif de tomographie par cohérence optique selon l'une des revendications précédentes, comprenant en outre :
une commande (58) pour commander l'élément de commutation (55) du dispositif de tomographie par cohérence optique ;
dans lequel la commande (58) est configurée pour sélectionner une section de référence (511) avec un intervalle de mesure actif positif ou négatif (pMB, nMB) en fonction d'un sous-intervalle prédéterminé de l'intervalle de distance (O) et basculer vers la section de référence (511) sélectionnée au moyen de l'élément de commutation (55).

9. Dispositif de tomographie par cohérence optique selon la revendication 8, dans lequel la commande (58) est configurée pour basculer, pour une mesure de distance dans un sous-intervalle de l'intervalle de distance (O) spécifié, dans une section de référence (511) plus courte avec des distances plus grandes au moyen de l'élément de commutation (55).

10. Système d'usinage au laser (1000), comprenant :
une tête d'usinage au laser (100) pour projeter un faisceau laser (10) sur une pièce (20) ;
un dispositif de tomographie par cohérence optique (50) selon l'une des revendications précédentes ; et
un dispositif de commande (1100) pour commander le système d'usinage au laser.

11. Système d'usinage au laser selon la revendication 10, dans lequel la tête d'usinage au laser (100) comprend un dispositif de balayage (30) avec au moins un élément de balayage pour dévier le faisceau laser (10) vers une pluralité de positions sur la pièce (20), et
dans lequel le dispositif de commande (1100) est configuré pour sélectionner l'une des sections de référence (511) pour la mesure de distance, en fonction d'une commande de balayage pour régler l'élément de balayage du dispositif de balayage (30).

12. Système d'usinage au laser selon la revendication 11, comprenant en outre :
un dispositif d'évaluation (59) qui est configuré pour déterminer la distance sur la base de la commande de balayage et sur la base d'une superposition d'une partie du faisceau lumineux de mesure (525) provenant du bras de mesure (52) et du faisceau de référence provenant du bras de référence (51), qui est réfléchie par l'objet.

13. Système d'usinage au laser selon la revendication 10, 11 ou 12, dans lequel le dispositif de commande (1100) est configuré pour déterminer, sur la base de valeurs de distance qui ont été déterminées à partir du dispositif de tomographie par cohérence optique (525) pendant un balayage du faisceau lumineux de mesure (20) sur la pièce (20) au moyen du dispositif de balayage (30), un alignement et/ou une inclinaison de la tête d'usinage au laser (100) par rapport à un plan de travail et/ou à la pièce (20).

14. Système d'usinage au laser selon la revendication 10, 11, 12 ou 13, dans lequel le dispositif de commande est configuré pour affecter des valeurs de hauteur de référence à des positions correspondantes dans une zone de balayage du dispositif de balayage (30), et pour déterminer la distance par rapport à la pièce à une position de balayage prédéfinie sur la base de cette affectation et d'une mesure à cette position de balayage.

15. Système d'usinage au laser selon la revendication 10, 11, 12, 13 ou 14, dans lequel le dispositif de commande est configuré pour adapter des paramètres de système et/ou des paramètres d'usinage sur la base de la distance déterminée.
